(19) Europäisches Patentamt / European Patent Office / Office européen des brevets

(11) **EP 3 940 414 A1**

(12) **EUROPEAN PATENT APPLICATION**
published in accordance with Art. 153(4) EPC

(43) Date of publication:
**19.01.2022 Bulletin 2022/03**

(21) Application number: **20769708.7**

(22) Date of filing: **04.03.2020**

(51) International Patent Classification (IPC):
**G01S 7/4865** (2020.01)   **G01C 3/06** (2006.01)

(52) Cooperative Patent Classification (CPC):
**G01C 3/06; G01S 7/486; G01S 7/4865; G01S 17/10**

(86) International application number:
**PCT/JP2020/009077**

(87) International publication number:
**WO 2020/184325 (17.09.2020 Gazette 2020/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2019 JP 2019045273**

(71) Applicant: **Sony Semiconductor Solutions Corporation**
**Atsugi-shi, Kanagawa 243-0014 (JP)**

(72) Inventors:
• **HIYAMA, Hiroki**
**Atsugi-shi, Kanagawa 243-0014 (JP)**
• **SAKAZUME, Shunsuke**
**Atsugi-shi, Kanagawa 243-0014 (JP)**

(74) Representative: **Müller Hoffmann & Partner Patentanwälte mbB**
**St.-Martin-Strasse 58**
**81541 München (DE)**

(54) **MEASUREMENT DEVICE, RANGING DEVICE, AND MEASUREMENT METHOD**

(57) A measurement apparatus (110A) according to an embodiment includes: a time-to-digital converter circuit (111) that measures a time period between an emission timing at which light is emitted from a light emitting unit (101) and a time point at which a light receiving unit (102) receives the light; a delay means (114A) that adds, to the time period measured by the time-to-digital converter circuit, a positive or a negative delay having a length that is different from a cycle of a clock used by the time-to-digital converter circuit and that is used as a unit amount of delay; and a storage unit (112) that stores therein time information that indicates the time period measured by the time-to-digital converter circuit and delay information that indicates an amount of delay to be added by the delay means, in association with each other, related to each of a case in which a delay is added by the delay means and a case in which a delay is not added by the delay means.

FIG.2

EP 3 940 414 A1

**Description**

Field

The present invention relates to a measurement apparatus, a ranging apparatus, and a measurement method.
Background
There is a known technique called a direct time of flight (ToF) technique for measuring a distance to an object to be measured by using light. The ToF technique is a technique for measuring a distance to an object to be measured such that light that is emitted from a light emitting unit and that is reflected by the object to be measured is received by a light receiving unit and the distance to the object to be measured is measured on the basis of a time difference between a light emission timing and a light reception timing. Specifically, a period of time between a time point at which light emitted from the light emitting unit is reflected at the object to be measured and a time point at which the light arrives at the light receiving unit is measured by a time to digital converter (TDC) circuit, and the distance to the object to be measured is measured on the basis of the measured period of time.

Citation List

Patent Literature

Patent Literature 1: Japanese Laid-open Patent Publication No. 2016-211881

Summary

Technical Problem

In an existing technique that uses the direct ToF technique, resolution of a distance to be measured is limited to a frequency of a clock that is used by the time-to-digital converter circuit, and thus, there is a need to increase a clock frequency (to shorten a clock cycle) in order to improve the resolution. In order to increase the clock frequency, there is a need to use a most advanced microfabrication process, which leads to an increase in costs. Furthermore, in particular, in a ranging apparatus that uses a light receiving element array, in which a plurality of light receiving elements, are arrayed as a light receiving unit and that is configured so as to be capable of obtaining a spatial distance map, high-speed clocks need to be distributed so as to avoid the occurrence of a delay difference in a wide range; therefore, there is a problem in that an area of a clock tree and the electrical power consumption are increased.
Accordingly, it is an object in one aspect of an embodiment of the present disclosure to provide a measurement apparatus, a ranging apparatus, and a measurement method capable of improving resolution without increasing a clock frequency.

Solution to Problem

For solving the problem described above, a measurement apparatus according to one aspect of the present disclosure has a time-to-digital converter circuit that measures a time period between an emission timing at which light is emitted from a light emitting unit and a time point at which a light receiving unit receives the light; a delay means that adds, to the time period measured by the time-to-digital converter circuit, a positive or a negative delay having a length that is different from a cycle of a clock used by the time-to-digital converter circuit and that is used as a unit amount of delay; and a storage unit that stores therein time information that indicates the time period measured by the time-to-digital converter circuit and delay information that indicates an amount of delay to be added by the delay means, in association with each other, related to each of a case in which a delay is added by the delay means and a case in which a delay is not added by the delay means.

Brief Description of Drawings

FIG. 1 is a diagram schematically illustrating ranging performed by using a direct ToF technique.
FIG. 2 is a block diagram illustrating a configuration example of a ranging apparatus according to a first embodiment.
FIG. 3 is a schematic diagram illustrating an example of a light emitting unit.
FIG. 4 is a schematic diagram illustrating an example of a light receiving unit.
FIG. 5 is a schematic diagram illustrating an example of a time-to-digital converter circuit.

FIG. 6 a schematic diagram illustrating an example of a delay means.

FIG. 7A is a timing chart illustrating an example of an operation according to the first embodiment.

FIG. 7B is a timing chart illustrating an example of an operation according to the first embodiment.

FIG. 7C is a timing chart illustrating an example of an operation according to the first embodiment.

FIG. 7D is a timing chart illustrating an example of an operation according to the first embodiment.

FIG. 8 is a diagram illustrating an example of a correspondence table that is used in the first embodiment.

FIG. 9 is a flowchart schematically illustrating an example of a measurement process according to the first embodiment.

FIG. 10A is a timing chart illustrating an example of an operation according to a modification.

FIG. 10B is a timing chart illustrating an example of an operation according to the modification.

FIG. 10C is a timing chart illustrating an example of an operation according to the modification.

FIG. 10D is a timing chart illustrating an example of an operation according to the modification.

FIG. 11 is a diagram illustrating an example of a correspondence table that is used in the modification.

FIG. 12 is a block diagram illustrating a configuration example of a ranging apparatus according to a second embodiment.

FIG. 13A is a timing chart illustrating an example of an operation according to the second embodiment.

FIG. 13B is a timing chart illustrating an example of an operation according to the second embodiment.

FIG. 13C is a timing chart illustrating an example of an operation according to the second embodiment.

FIG. 13D is a timing chart illustrating an example of an operation according to the second embodiment.

FIG. 14 is a block diagram illustrating a configuration example of a ranging apparatus according a third embodiment.

FIG. 15 is a schematic diagram illustrating an example of a delay means.

FIG. 16A is a timing chart illustrating an example of an operation according to the third embodiment.

FIG. 16B is a timing chart illustrating an example of an operation according to the third embodiment.

FIG. 16C is a timing chart illustrating an example of an operation according to the third embodiment.

FIG. 16D is a timing chart illustrating an example of an operation according to the third embodiment.

FIG. 17 is a diagram illustrating an example of a correspondence table that is used in the third embodiment.

FIG. 18 is a block diagram illustrating a configuration example of a ranging apparatus according to a fourth embodiment.

FIG. 19A is a schematic diagram illustrating an example of a delay means.

FIG. 19B is a schematic diagram illustrating an example of a delay means.

FIG. 19C is a schematic diagram illustrating an example of a delay means.

FIG. 20A is a timing chart illustrating an example of an operation according to the fourth embodiment.

FIG. 20B is a timing chart illustrating an example of an operation according to the fourth embodiment.

FIG. 20C is a timing chart illustrating an example of an operation according to the fourth embodiment.

FIG. 20D is a timing chart illustrating an example of an operation according to the fourth embodiment.

FIG. 21 is a block diagram illustrating a configuration example of a ranging apparatus according to a fifth embodiment.

FIG. 22 is a diagram schematically illustrating an example of the structure of the ranging apparatus according to the fifth embodiment.

FIG. 23 is a block diagram illustrating a configuration example of a ranging apparatus according to a sixth embodiment.

FIG. 24 is a diagram schematically illustrating an example of the structure of the ranging apparatus according to the sixth embodiment.

FIG. 25 is a diagram illustrating a use example of a ranging apparatus used in each of the embodiments.

FIG. 26 is a block diagram illustrating a schematic configuration example of a vehicle control system that is an example of a movable body control system to which the technique according to the present disclosure is applicable.

FIG. 27 is a diagram illustrating an example of installation positions of an imaging unit.

Description of Embodiments

Preferred embodiments of the present disclosure will be described in detail below with reference to the accompanying drawings. Furthermore, in each of the embodiments, by assigning the same reference numerals to components having the same functional configuration, overlapping descriptions thereof will be omitted.

<Outline of direct ToF technique>

The present disclosure relates to a technology for performing ranging by using a direct ToF technique. Before a description of each of the embodiments according to the present disclosure, in order to facilitate understanding, an outline of the direct ToF technique used in each of the embodiments will be described.

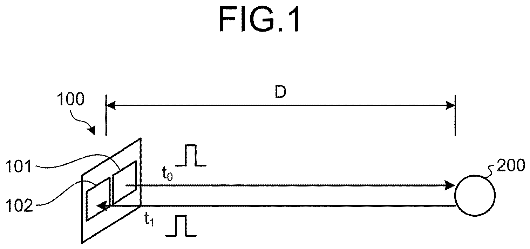

FIG. 1 is a diagram schematically illustrating raging performed by using the direct ToF technique. A ranging apparatus 100 includes a light emitting unit 101 and a light receiving unit 102. The light emitting unit 101 includes a light source, such as a laser diode, that emits, for example, pulse laser light. The light emitted from the light emitting unit 101 is reflected by an object to be measured 200 and is received by the light receiving unit 102 as reflected light. The light receiving unit 102 includes a light receiving element, which converts the received light to an electrical signal by performing photoelectric conversion, and outputs a predetermined signal in accordance with the reception of the light.

Here, it is assumed that a time point at which the light emitting unit 101 emits light (light emission timing) is denoted by $t_0$, and a time point at which the light receiving unit 102 receives the light that is emitted from the light emitting unit 101 and that is reflected by the object to be measured 200 (light reception timing) is denoted by $t_1$. If a constant c is a speed of light ($2.9979 \times 10^8$ [m/sec]), a distance D between the ranging apparatus 100 and the object to be measured 200 is calculated by Equation (1) below.

$$D = (c/2) \times (t_1 - t_0) \qquad\qquad (1)$$

A difference ($t_1$-$t_0$) between a light reception timing $t_1$ and a light emission timing $t_0$ corresponds to a period of time between a time point at which light is emitted from the light emitting unit 101 and a time point at which the emitted light is reflected by the object to be measured 200 and arrives at the light receiving unit 102, and is called optical time of flight TOFO. The ranging apparatus 100 measures the optical time of flight TOFO by using a time-to-digital converter circuit, which will be described later, and measures the distance D between the optical time of flight TOFO and the object to be measured 200 by using a signal processing unit, which will be described later.

Furthermore, the light received by the light receiving unit 102 is not limited to the reflected light that is emitted from the light emitting unit 101 and that is reflected by the object to be measured 200. For example, ambient light around the ranging apparatus 100 is also received by the light receiving unit 102. This kind of ambient light is randomly received by the light receiving unit 102 and may cause noise with respect to the reflected light from which the light reception timing $t_1$ is to be specified. Therefore, it may also be possible to reduce an influence of random noise, such as ambient light, by using a method described below.

Namely, the ranging apparatus 100 obtains the difference ($t_1$-$t_0$) described above every time the light receiving unit 102 receives the light by repeatedly emitting light performed by the light emitting unit 101 a predetermined number of times, and generates a histogram by classifying the obtained large number of differences ($t_1$-$t_0$) into time ranges divided by a predetermined time unit. Then, a representative time of the time range in which the frequency is the maximum in the generated histogram (for example, the median value in the time range having the maximum frequency) is defined as the optical time of flight TOFO. Consequently, it is possible to implement robust ranging with respect to random noise.

The ranging apparatus 100 according to an embodiment of the present disclosure includes a delay means that adds, to a time period measured by the time-to-digital converter circuit, a positive or a negative delay having a length that is different from a cycle of a clock used by the time-to-digital converter circuit and that is used as a unit amount of delay. Then, regarding a case in which a delay is added by the delay means and a case in which a delay is not added by the delay means, time information that indicates the time period measured by the time-to-digital converter circuit is stored in a storage unit in association with delay information that indicates an amount of delay to be added by the delay means, and then, the distance D to the object to be measured 200 is calculated on the basis of a combination between the time information and the delay information stored in the storage unit. Consequently, it is possible to improve resolution of the distance to be measured without increasing the clock frequency. In a description below, each of the embodiments in accordance with variations in the delay means will be described in detail by using specific examples.

<First Embodiment>

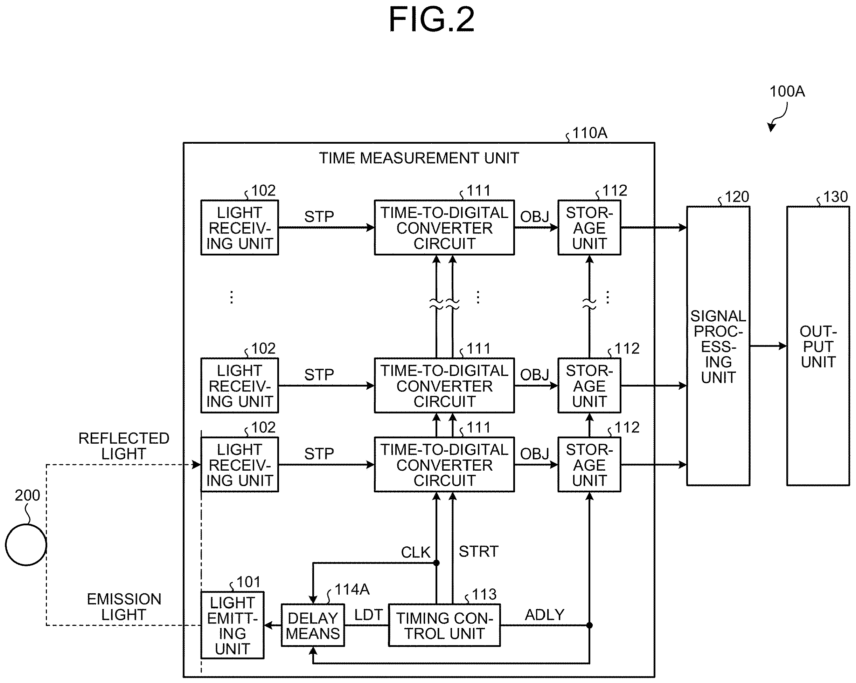

First, a first embodiment according to the present disclosure will be described. FIG. 2 is a block diagram illustrating a configuration example of a ranging apparatus 100A according to the first embodiment. The ranging apparatus 100A according to the embodiment includes, as illustrated in FIG. 2, a time measurement unit (measurement apparatus) 110A, a signal processing unit 120, and an output unit 130.

The time measurement unit 110A includes the light emitting unit 101, the light receiving units 102, time-to-digital converter circuits 111, storage units 112, a timing control unit 113, and a delay means 114A. In the embodiment, the plurality of the light receiving units 102 are arrayed so as to be capable of obtaining a spatial distance map, and the time-to-digital converter circuits 111 and the storage units 112 are arranged for the respective light receiving units 102, and thus, it is assumed that ranging operations are possible in parallel in this configuration. Furthermore, the light emitting unit 101 may also be arranged outside of the time measurement unit 110A.

The timing control unit 113 controls a timing of an operation performed in the time measurement unit 110A. For example, the timing control unit 113 outputs a trigger signal LDT that is input to the light emitting unit 101 and a measurement start signal STRT that is input to the time-to-digital converter circuit 111. The trigger signal LDT is a signal for controlling a timing at which the light emitting unit 101 emits light. The measurement start signal STRT is a signal that instructs the time-to-digital converter circuit 111 to start measurement of a time period and is output from the timing control unit 113 in synchronization with the trigger signal LDT. Furthermore, the timing control unit 113 supplies a clock CLK with a predetermined frequency (predetermined cycle) to the time-to-digital converter circuit 111 and the delay means 114A. Furthermore, the timing control unit 113 outputs, to the delay means 114A and the storage unit 112, delay information ADLY that is digital data and that indicates an amount of delay DELAY to be added by the delay means 114A.

In the embodiment, as illustrated in FIG. 2, the delay means 114A is arranged between the output terminal of the timing control unit 113 that outputs the trigger signal LDT and the light emitting unit 101. The delay means 114A adds a positive delay to a time period that is measured by the time-to-digital converter circuit 111 by delaying the timing, at which the trigger signal LDT that is output from the timing control unit 113 is input to the light emitting unit 101, in accordance with the amount of delay DELAY that is indicated by the delay information ADLY.

Namely, the trigger signal LDT that is output from the timing control unit 113 is delayed, by the delay means 114A, by the amount of delay DELAY that is indicated by the delay information ADLY, and is then input to the light emitting unit 101. When the trigger signal LDT is input, the light emitting unit 101 emits light toward the object to be measured 200. The reflected light reflected from the object to be measured 200 is received by the light receiving unit 102, is converted to an electrical signal, is output as a measurement stop signal STP from the light receiving unit 102, and is input to the time-to-digital converter circuit 111.

The time-to-digital converter circuit 111 starts a count operation on the basis of the clock CLK supplied from the timing control unit 113 at a timing at which the measurement start signal STRT that is output from the timing control unit 113 in synchronization with the trigger signal LDT. Then, if the measurement stop signal STP that is output from the light receiving unit 102 is input, the time-to-digital converter circuit 111 outputs a count value at the time point, at which the light receiving unit 102 is input, as time information OBJ that corresponds to digital data, and then, implements time to digital conversion. The time information OBJ that is output from the time-to-digital converter circuit 111 is input to the storage unit 112.

Furthermore, a time period that is measured by the time-to-digital converter circuit 111 is a period of time between a time point at which the timing control unit 113 outputs the trigger signal LDT and a time point at which the measurement stop signal STP is input to the time-to-digital converter circuit 111, i.e., a period of time between an emission timing at which light is emitted from the light emitting unit 101 and a time point at which the light receiving unit 102 receives the light. In the embodiment, as described above, the timing at which the trigger signal LDT that is output from the timing control unit 113 is input to the light emitting unit 101 is delayed by the delay means 114A, so that a positive delay is added to the time period measured by the time-to-digital converter circuit 111.

The storage unit 112 stores therein the time information OBJ that is output from the time-to-digital converter circuit 111 in association with the delay information ADLY that is output from the timing control unit 113. In the embodiment, the operation described above performed by a time measurement unit 110 is repeatedly carried out for a single ranging by switching an amount of delay DELAY (including no delay) to be added by the delay means 114A, and then, regarding each of a case in which a delay is added by the delay means 114A and a case in which a delay is not added by the delay means 114A, the time information OBJ that is output from the time-to-digital converter circuit 111 is stored, in the storage unit 112, in association with the delay information ADLY that is output from the timing control unit 113.

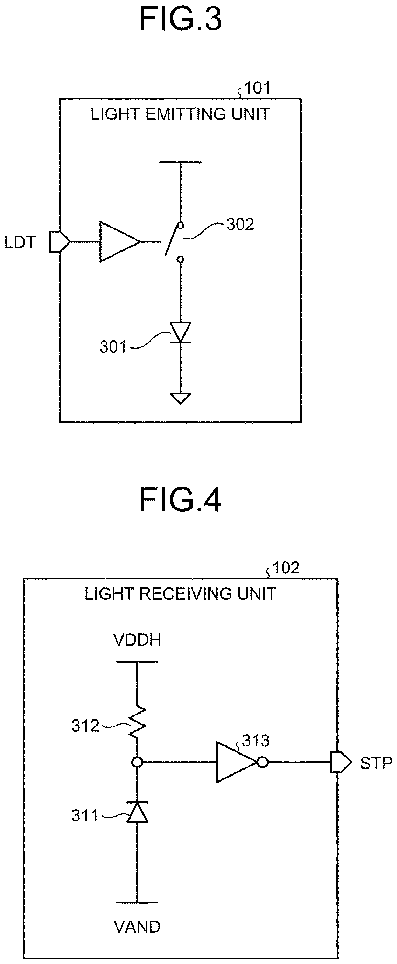

FIG. 3 is a schematic diagram illustrating an example of the light emitting unit 101. The light emitting unit 101 includes an input terminal for the trigger signal LDT, and, if the trigger signal LDT becomes H (active), a switch 302 is turned on, a predetermined bias is applied to a laser diode 301, and a laser diode 151 emits laser light, so that light is emitted. The light emitted from the laser diode 151 travels in an approximate straight line along a direction of an optical axis.

FIG. 4 is a schematic diagram illustrating an example of the light receiving unit 102. The light receiving unit 102 includes an avalanche diode 311 as a photoelectric conversion element that is capable of detecting weak light; however, another element may also be included. The avalanche diode 311 enters a standby state of a photon in a state in which a power supply voltage VDDH is supplied by a resistance element 312. At this time, both ends of the avalanche diode 311 are in a state in which a voltage that is greater than or equal to a breakdown voltage is applied. Once a photon is incident on the avalanche diode 311 and is subjected to photoelectric conversion to generate a carrier and thus breakdown occurs caused by the generated carrier, the resistance element 312 converts the breakdown electric current flowing through the avalanche diode 311 to a voltage. An inverter 313 binarizes a change in electrical potential of the cathode of the avalanche diode 311 and supplies a pulse to the output terminal of the measurement stop signal STP.

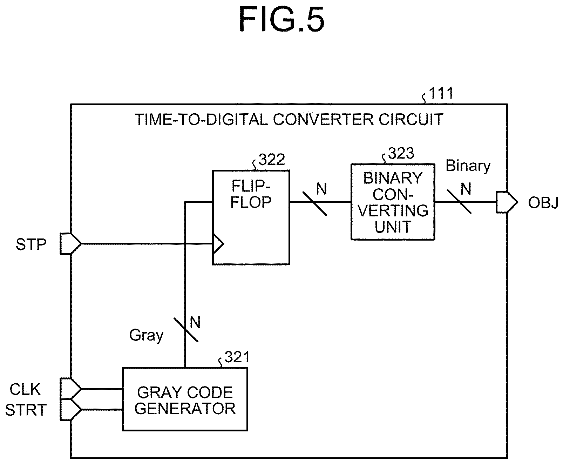

FIG. 5 is a schematic diagram illustrating an example of the time-to-digital converter circuit 111. A gray code generator 321 outputs an N-bit gray code on the basis of the clock CLK and the measurement start signal STRT. The gray code generator 321 may also be common to the plurality of the time-to-digital converter circuits 111. A flip-flop 322 latches the gray code at a timing at which the measurement stop signal STP is input from the light receiving unit 102. The latched gray code is converted to a binary code by a binary converting unit 323 and is output as the time information OBJ that corresponds to digital data.

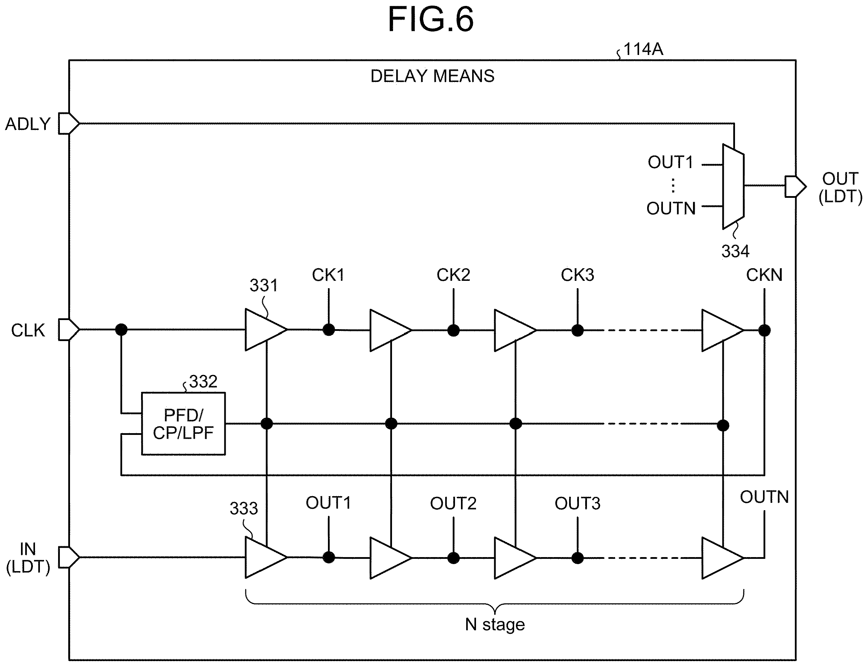

FIG. 6 is a schematic diagram illustrating an example of the delay means 114A. The delay means 114A illustrated in FIG. 6 enables N-stage delay outputs (including no delay) by using a delay locked loop (DLL). By using a delay buffer 331 and a frequency phase detector (PFD)/charge pump (CP)/low-pass filter (LPF) 332 that constitute the DLL, an amount of delay (unit amount of delay) of the delay buffer 331 for each stage is an amount equal to 1/N of a single cycle (clock cycle) of the clock CLK. By replicating the amount of delay onto the delay buffer 333 that is used for the subject signal, it is possible to allow a predetermined amount of delay DELAY to be added to the trigger signal LDT that is input to the input terminal IN. A selector 334 selects a single delay output from among the N-stage delay outputs on the basis of the delay information ADLY. In the embodiment, because N=4 is assumed, a single output is selected from among OUT1 to OUT4, the trigger signal LDT that is delayed by the amount of delay DELAY in accordance with the delay information ADLY is output from the output terminal OUT and is then input to the light emitting unit 101.

The signal processing unit 120 calculates the distance D between the ranging apparatus 100A and the object to be measured 200 on the basis of the information stored in the storage unit 112 in the time measurement unit 110A. In the ranging apparatus 100A according to the embodiment, as described above, an operation performed by the time measurement unit 110 is repeated N times for a single ranging by switching the amount of delay DELAY (including no delay) to be added by the delay means 114A. Then, combinations of the pieces of time information OBJ that is output from the time-to-digital converter circuit 111 and the pieces of delay information ADLY that indicates the amount of delay DELAY to be added by by the delay means 114A are stored in the storage unit 112 by an amount corresponding to N pieces of combinations that are associated with the operations performed N times. For example, if N=4, the delay information ADLY indicating that the amount of delay DELAY is 0 (no delay), the delay information ADLY indicating that the amount of delay DELAY is an amount equal to 1/4 of a clock cycle, the delay information ADLY indicating that the amount of delay DELAY is an amount equal to 2/4 of the clock cycle, and the delay information ADLY that indicates the amount of delay DELAY is an amount equal to 3/4 of the clock cycle are associated with each other, and, if each of the amounts of delay DELAY is added, the time information OBJ that is output from the time-to-digital converter circuit 111 is stored in the storage unit 112.

The signal processing unit 120 is able to calculate, with the resolution of 1/N of the clock cycle, the optical time of flight TOFO described above on the bases of the N combinations of the pieces of time information OBJ and the pieces of delay information ADLY. Furthermore, the signal processing unit 120 is able to calculate, from the calculated optical time of flight TOFO, the distance D to the object to be measured 200 on the basis of Equation (1) described above.

The output unit 130 outputs the distance information that indicates the distance D to the object to be measured 200 and that is calculated by the signal processing unit 120 to the outside. Furthermore, the output unit 130 may also output, instead of the distance D to the object to be measured 200, a value corresponding to the optical time of flight TOFO described above as the distance information to the outside. For example, an interface, such as a mobile industry processor interface (MIPI), may be used for the output unit 130.

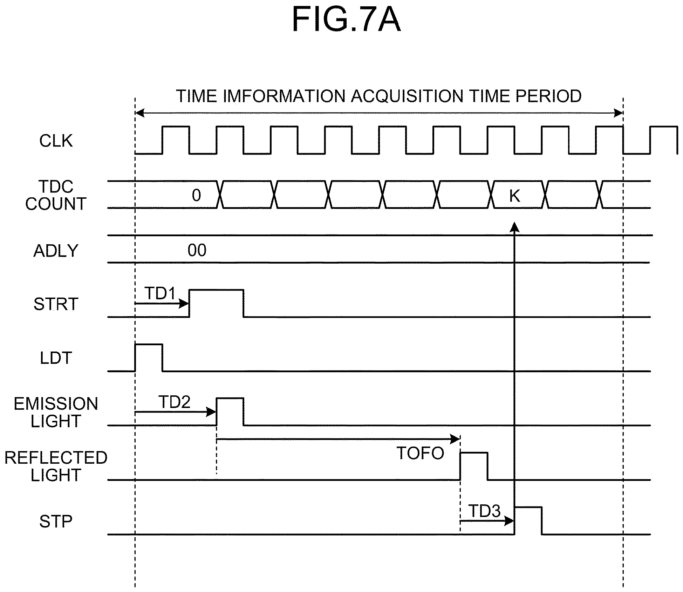

In the following, an example of an operation according to the first embodiment will be described by using timing charts illustrated in FIG. 7A to FIG. 7D. As described above, the ranging apparatus 100A according to the first embodiment obtains a single piece of ranging information by repeating an operation performed by the time measurement unit 110 N times (in the embodiment, N=4) while switching the amount of delay DELAY (including no delay) to be added by the delay means 114A. Each of the timing charts illustrated in FIG. 7A to FIG. 7D is associated with a single operation performed by the time measurement unit 110.

In the embodiment, it is assumed that a unit amount of delay used by the delay means 114A is defined as an amount equal to 1/4 of the clock cycle, and it is assumed that the delay information ADLY indicating that the amount of delay DELAY is 0 (no delay) is denoted by "00", the delay information ADLY indicating that the amount of delay DELAY is an amount equal to 1/4 of the clock cycle is denoted by "01", the delay information ADLY indicating that the amount of delay DELAY is an amount equal to 2/4 of the clock cycle is denoted by "10", and the delay information ADLY indicating that the amount of delay DELAY is an amount equal to 3/4 of the clock cycle is denoted by "11", all of which are represented by 2 bits.

First, an operation performed in a case in which the delay information ADLY is "00" will be described with reference to FIG. 7A. When the clock CLK and the measurement start signal STRT are input from the timing control unit 113, the time-to-digital converter circuit 111 starts the count operation. Furthermore, pulsed laser light is emitted from the light emitting unit 101 to the object to be measured 200 due to the trigger signal LDT that is in synchronization with the measurement start signal STRT. Here, because the delay information ADLY is "00", the trigger signal LDT is input to the light emitting unit 101 without being delayed by the delay means 114A. The emission light emitted from the light emitting unit 101 is reflected by the object to be measured 200 and is received the light receiving unit 102 as the reflected light. A period of time between a time point at which the light emitting unit 101 emits emission light and a time point at which the light receiving unit 102 receives the reflected light is the optical time of flight TOFO.

The reflected light that is received by the light receiving unit 102 is converted to the electrical signal by being subjected to photoelectric conversion, and then, the measurement stop signal STP is generated and is input to the time-to-digital converter circuit 111. The time-to-digital converter circuit 111 latches the count value of the time point at which the measurement stop signal STP is input, performs binary conversion on the latched count value, and outputs the converted value as the time information OBJ that is digital data.

Here, if an internal delay of the measurement start signal STRT is denoted by TD1, an internal delay of the trigger signal LDT to the light emitting unit 101 is denoted by TD2, and an internal delay of the measurement stop signal STP between the light receiving unit 102 and the time-to-digital converter circuit 111 is denoted by TD3, the time information OBJ that is output by the time-to-digital converter circuit 111 can be expressed by Equation (2) below.

$$OBJ=TOFO+TD2+TD3+TD1 \qquad\qquad (2)$$

Furthermore, each of TD1, TD2, and TD3 is a fixed value, and it is possible to obtain TOFO that is true optical time of flight from the time information OBJ by separately measuring these internal delays indicated by TD1, TD2, and TD3; therefore, in the present disclosure, these TD1, TD2, and TD3 can be ignored, and thus, it is assumed that time information OBJ that is output by the time-to-digital converter circuit 111 corresponds to the value of the optical time of flight TOFO.

In the example illustrated in FIG. 7A, it is assumed that a value of "K" is able to be obtained as the time information OBJ by the time-to-digital converter circuit 111. In this case, the time information OBJ="K" is stored in and held by the storage unit 112 in association with the delay information ADLY="00".

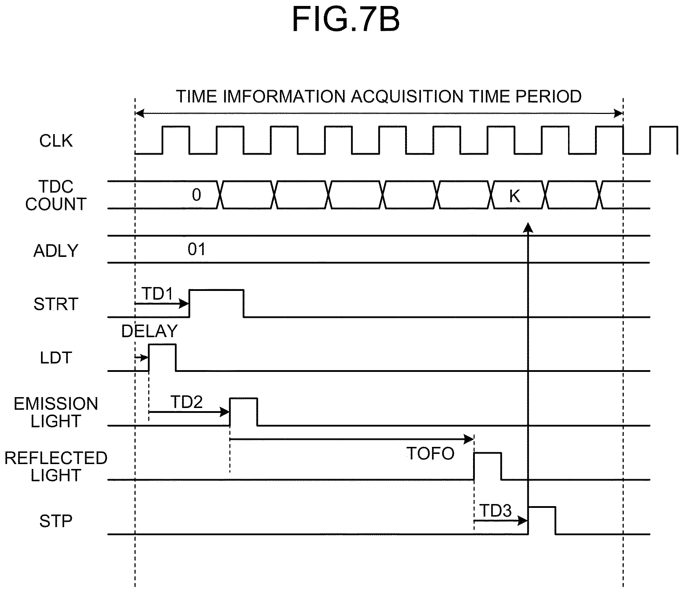

In the following, an operation performed in a case in which the delay information ADLY is "01" will be described with reference to FIG. 7B. In the delay means 114A, in accordance with the delay information ADLY="01", the amount of delay DELAY corresponding to an amount equal to 1/4 of the clock cycle (an amount equal to a single unit of a unit amount of delay) is added to the trigger signal LDT, and the trigger signal LDT is input to the light emitting unit 101 by being delayed by an amount equal to 1/4 of the clock cycle. Consequently, each of the emission light, the reflected light, and the measurement stop signal STP is delayed by an amount equal to 1/4 of the clock cycle, and, as a result, the time period measured by the time-to-digital converter circuit 111 is increased by an amount equal to 1/4 of the clock cycle. Namely, a positive delay that corresponds to an amount equal to 1/4 of the clock cycle is added to the time period measured by the time-to-digital converter circuit 111. However, in the example illustrated in FIG. 7B, because the time information OBJ that indicates the count value latched by the time-to-digital converter circuit 111 remains "K", the time information OBJ="K" is stored in and held by the storage unit 112 in association with the delay information ADLY="01".

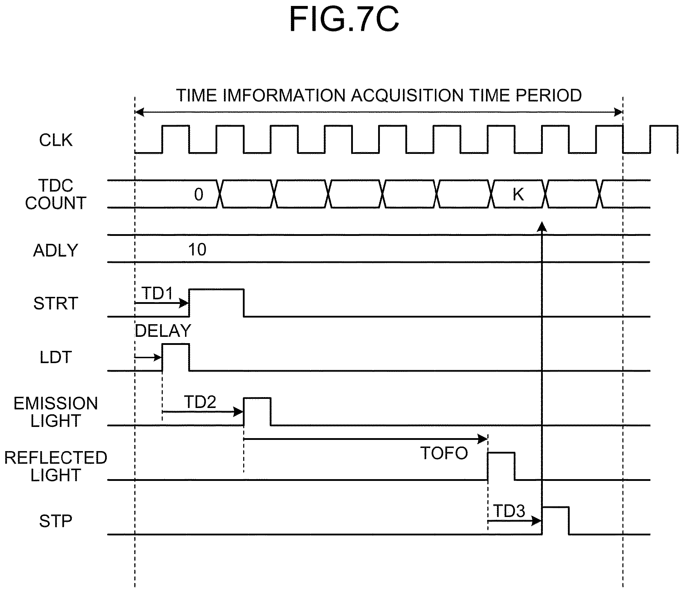

In the following, an operation performed in a case in which the delay information ADLY is "10" will be described with reference to FIG. 7C. In the delay means 114A, in accordance with the delay information ADLY="01", the amount of delay DELAY corresponding to an amount equal to 2/4 of the clock cycle (an amount equal to two units of a unit amount of delay) is added to the trigger signal LDT, and the trigger signal LDT is input to the light emitting unit 101 by being delayed by an amount equal to 2/4 of the clock cycle. Consequently, each of the emission light, the reflected light, and the measurement stop signal STP is delayed by an amount equal to 2/4 of the clock cycle, and, as a result, the time period measured by the time-to-digital converter circuit 111 is increased by an amount equal to 2/4 of the clock cycle. Namely, a positive delay that corresponds to an amount equal to 2/4 of the clock cycle is added to the time period measured by the time-to-digital converter circuit 111. However, in the example illustrated in FIG. 7C, because the time information OBJ that indicates the count value latched by the time-to-digital converter circuit 111 remains "K", the time information OBJ="K" is stored in and held by the storage unit 112 in association with the delay information ADLY="10".

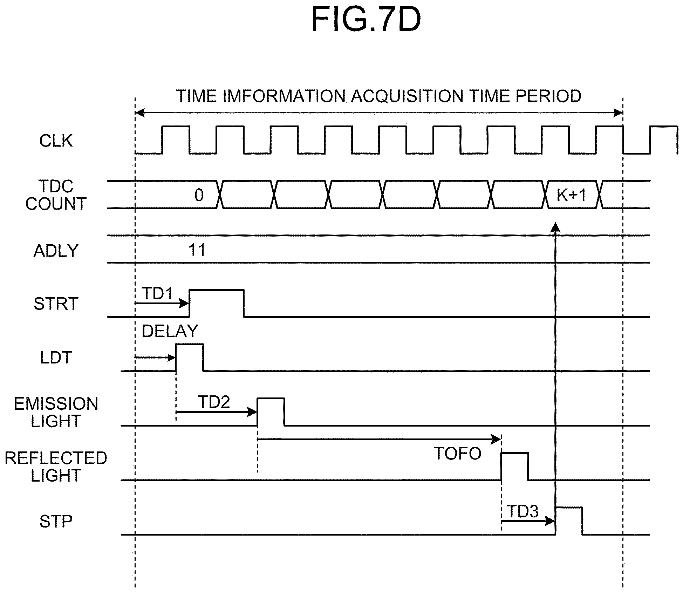

In the following, an operation performed in a case in which the delay information ADLY is "11" will be described with reference to FIG. 7D. In the delay means 114A, in accordance with the delay information ADLY="11", the amount of delay DELAY corresponding to an amount equal to 3/4 of the clock cycle (an amount equal to three units of a unit amount of delay) is added to the trigger signal LDT, and the trigger signal LDT is input to the light emitting unit 101 by being delayed by an amount equal to 3/4 of the clock cycle. Consequently, each of the emission light, the reflected light, and the measurement stop signal STP is delayed by an amount equal to 3/4 of the clock cycle, and, as a result, the time period measured by the time-to-digital converter circuit 111 is increased by amount equal to 3/4 of the clock cycle. Namely, a positive delay that corresponds to an amount equal to 3/4 of the clock cycle is added to the time period measured by the time-to-digital converter circuit 111. Here, in the example illustrated in FIG. 7D, the time information OBJ that indicates the count value latched by the time-to-digital converter circuit 111 is "K+1". Accordingly, the time information OBJ="K+1" is stored in and held by the storage unit 112 in association with the delay information ADLY="11".

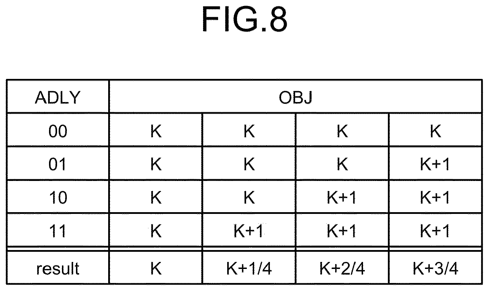

The signal processing unit 120 checks the combinations of the pieces of time information OBJ and the pieces of delay information ADLY that are stored in the storage unit 112 by the operations performed illustrated in FIG. 7A to FIG. 7D described above against the correspondence table illustrated in FIG. 8, so that the signal processing unit 120 is able to obtain the value corresponding to the optical time of flight TOFO and acquire the ranging information with the resolution of 1/4 of the clock cycle. Namely, pieces of 2-bit information of 0, 1/4, 2/4, and 3/4 are added as information indicating after the decimal point on the basis of the value of the delay information ADLY that is associated with the time information OBJ that transits from "K" to "K+1". As a result, it is possible to acquire the ranging information indicated with the resolution of 1/4 of the clock cycle. In each of the examples indicated by FIG. 7A to FIG. 7D, the value corresponding to the optical time of flight TOFO is K+1/4.

In the above, as described in detail by using specific examples, according to the embodiment, in each of the case in which a delay is added by the delay means 114A and the case in which a delay is not added by the delay means 114A, the time information OBJ that indicates the time period measured by the time-to-digital converter circuit 111 is associated with the delay information ADLY that indicates the amount of delay DELAY to be added by the delay means 114A and the associated time information OBJ and the delay information ADLY are stored in the storage unit 112. Then, the distance D to the object to be measured 200 is calculated on the basis of the combinations of the pieces of time information OBJ and the pieces of delay information ADLY stored in the storage unit 112. Consequently, it is possible to improve the resolution of the distance to be measured without increasing the clock frequency.

Furthermore, in the embodiment, because the delay means 114A is used for the trigger signal LDT, even in a configuration in which the plurality of the time-to-digital converter circuits 111 are provided in association with the plurality of the light receiving units 102, an amount of delay to be added by the delay means 114A is managed by using only a single block, and it is thus possible to apply uniform delays on a plane with a simple configuration.

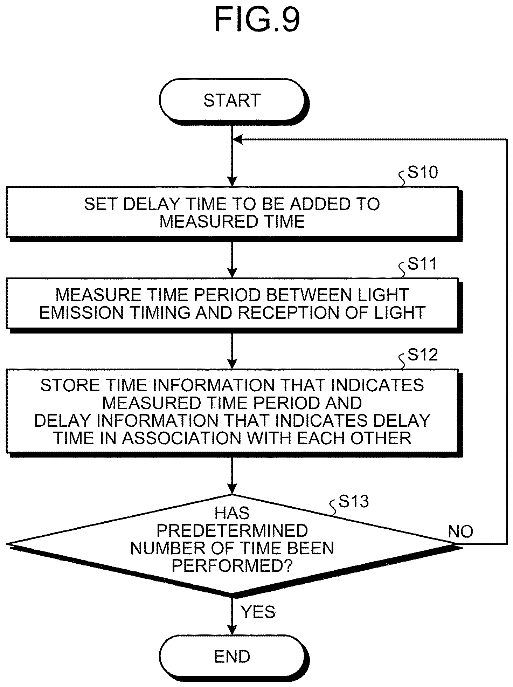

FIG. 9 is a flowchart schematically illustrating an example of a measurement process according to the first embodiment.

At Step S10, the delay means 114A sets a delay time (the amount of delay DELAY) that is added to the time period to be measured. In this example, the delay time is set with respect to the timing at which the trigger signal LDT is input to the light emitting unit 101. The light emitting unit 101 is allowed to emit light in response to the trigger signal LDT that is delayed by the set delay time, and then, outputs the light. Furthermore, when the light receiving unit 102 receives the light, the light receiving unit 102 outputs the measurement stop signal STP. At subsequent Step S11, the time-to-digital converter circuit 111 measures a time period between the emission timing at which the light is emitted by the light emitting unit 101 and a time point at which the light receiving unit 102 receives the light.

At subsequent Step S12, the storage unit 112 associates the delay information ADLY that indicates the delay time that is set at Step S10 with the time information OBJ that indicates the time period measured at Step S11 and stores the associated information.

At subsequent Step S13, the time measurement unit 110A determines whether the processes at Step S10 to Step S12 have been performed a predetermined number of times (four times in this example). If the time measurement unit 110A determines that the processes have been performed the predetermined number of times ("Yes" at Step S13), a series of processes indicated by the flowchart illustrated in FIG. 9 is ended. In contrast, if the time measurement unit 110A determines, at Step S13, that the processes at Step S10 to Step S12 have not been performed the predetermined number of times ("No" at Step S13), the process returns to Step S10 and a subsequent delay time is set.

<Modification>

Furthermore, in the first embodiment described above, the unit amount of delay used by the delay means 114A is assumed as an amount equal to 1/4 of the clock cycle; however, the embodiment is not limited to this as long as the unit amount of delay used by the delay means 114A is a value that is different from the value of the clock cycle. For example, if the clock cycle is denoted by $\tau1$, and a unit amount of delay used by the delay means 114A is denoted by $\tau2$, it may also be possible to use a configuration, in which the trigger signal LDT is allowed to be controlled by a clock cycle $\tau1$, so as to improve the resolution to $(\tau1-\tau2)$ by using vernier caliper principle on the basis of a combination of a delay step (a clock cycle $\tau1$) of the trigger signal LDT and a unit amount of delay $\tau2$ used by the delay means 114A.

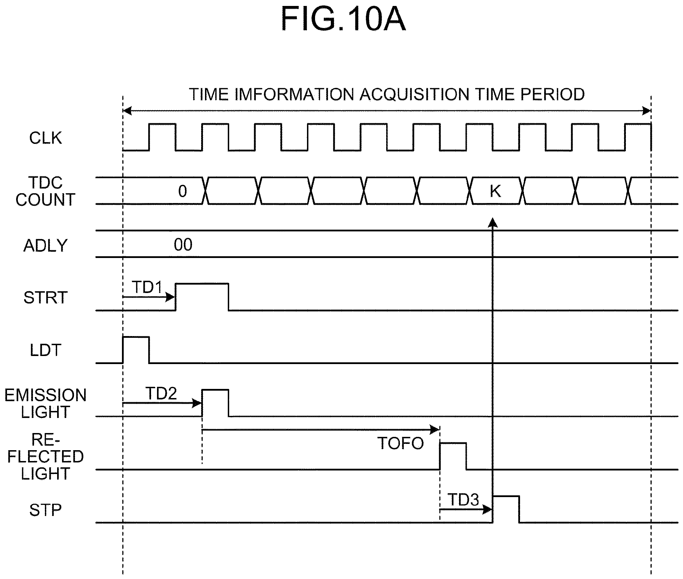

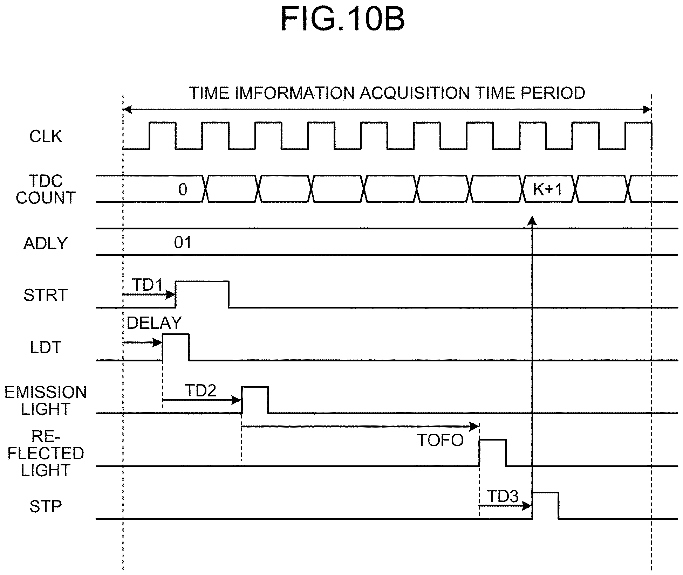

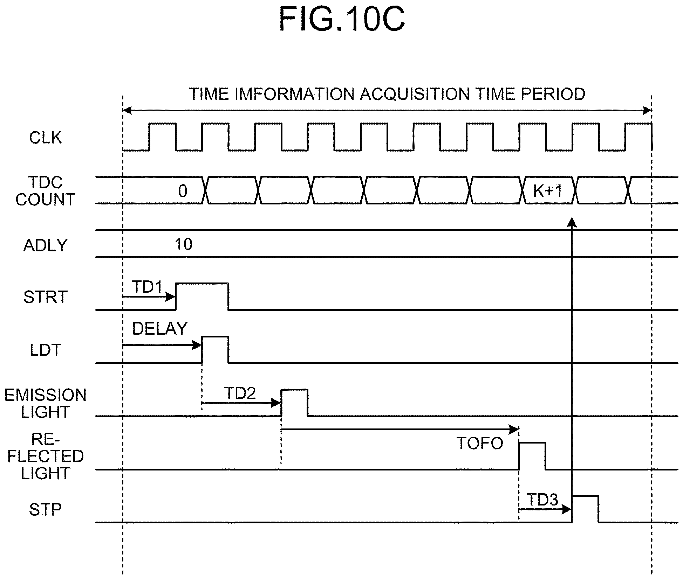

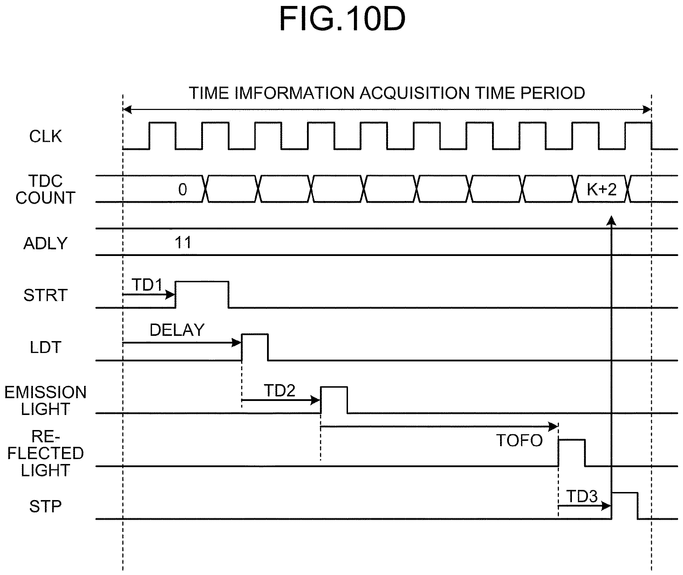

FIG. 10A to FIG. 10D are timing charts each illustrating an example of an operation according to the modification. In the examples, the unit amount of delay $\tau2$ used by the delay means 114A corresponds to an amount equal to 3/4 of the clock cycle $(\tau2=(3/4)\times\tau1)$, the delay information ADLY="00" indicates that the amount of delay DELAY is 0, the delay information ADLY="01" indicates that the amount of delay DELAY is $(3/4)\times\tau1$, the delay information ADLY="10" indicates that the amount of delay DELAY is $(6/4)\times\tau1$, and the delay information ADLY="11" indicates that the amount of delay DELAY is $(9/4)\times\tau1$, as illustrated in the respective drawings.

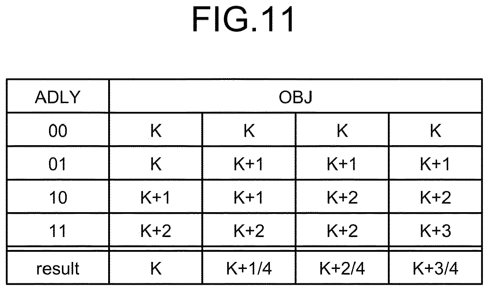

In the examples illustrated in FIG. 10A to FIG. 10D, a combination of the time information OBJ="K" and the delay information ADLY="00", a combination of the time information OBJ="K+1" and the delay information ADLY="01", a combination of the time information OBJ="K+1" and the delay information ADLY="10", and a combination of the time information OBJ="K+2" and the delay information ADLY="11" are stored in and held by the storage unit 112. The signal processing unit 120 obtains the value corresponding to the optical time of flight TOFO by checking the combinations of the pieces of time information OBJ and the pieces of delay information ADLY that are stored in the storage unit 112 against the correspondence table illustrated in FIG. 11. Consequently, it is possible to obtain the ranging information based on the resolution of $\tau1-\tau2$, i.e., $(1/4)\times\tau1$, instead of the unit amount of delay $\tau2$ used by the delay means 114A.

In the modification, if the unit amount of delay $\tau2$ used by the delay means 114A is not able to be reduced due to constraint, such as a process generation, it is possible to obtain an effect of obtaining the resolution less than or equal to the unit amount of delay $\tau2$.

<Second Embodiment>

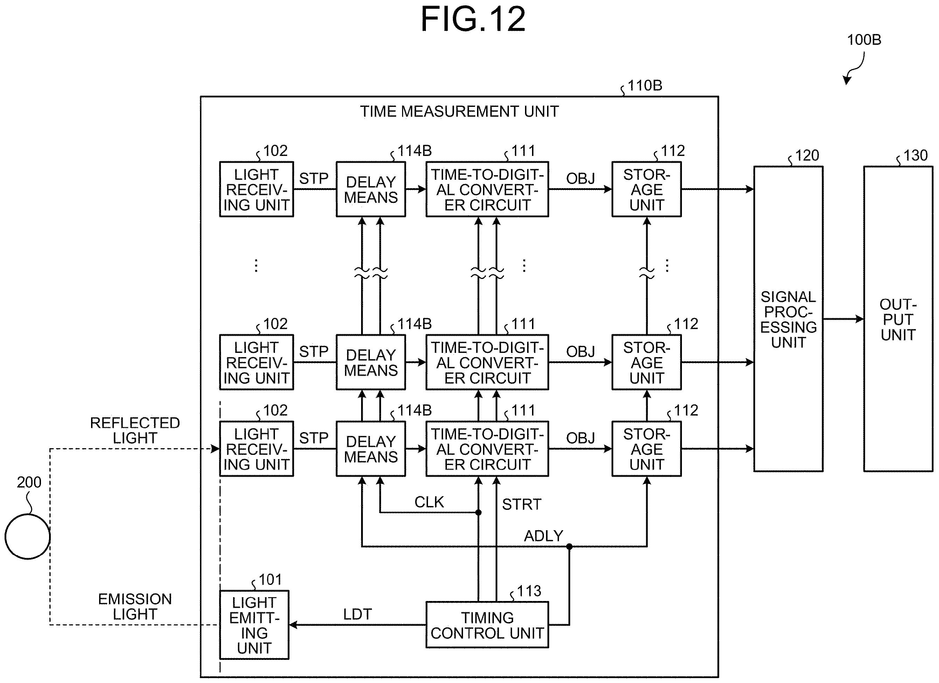

In the following, a second embodiment according to the present disclosure will be described. FIG. 12 is a block diagram illustrating a configuration example of a ranging apparatus 100B according to the second embodiment. In the embodiment, as illustrated in FIG. 12, a delay means 114B is arranged between the light receiving unit 102 and the time-to-digital converter circuit 111. The delay means 114B delays, in accordance with the amount of delay DELAY indicated by the delay information ADLY, the timing at which the measurement stop signal STP that is output from the light receiving unit 102 is input to the time-to-digital converter circuit 111, so that the delay means 114B adds a positive delay to the time period (the time period between a time point at which the timing control unit 113 outputs the trigger signal LDT and a time point at which the measurement stop signal STP is input to the time-to-digital converter circuit 111) measured by the time-to-digital converter circuit 111. The configurations of the other components included in the ranging apparatus 100B according to the second embodiment are the same as those of the ranging apparatus 100A according to the first embodiment.

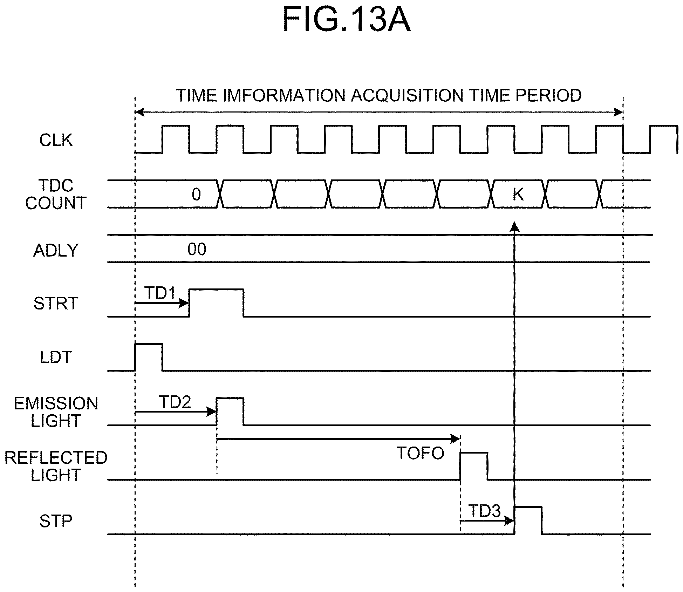

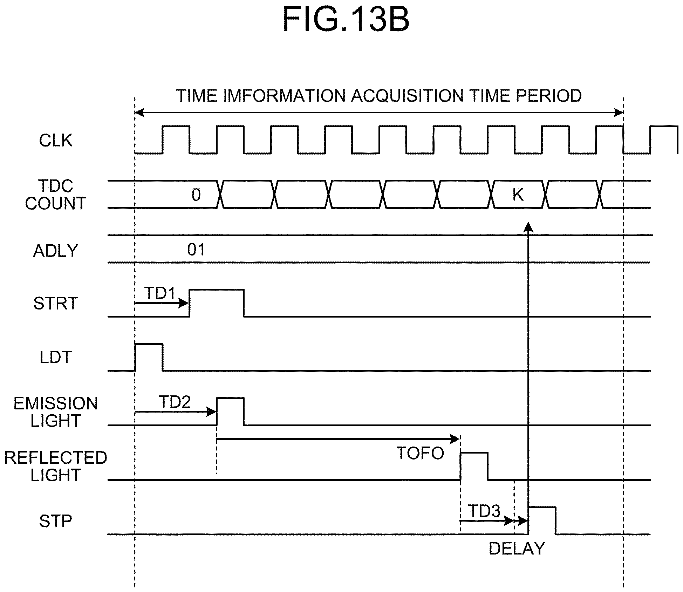

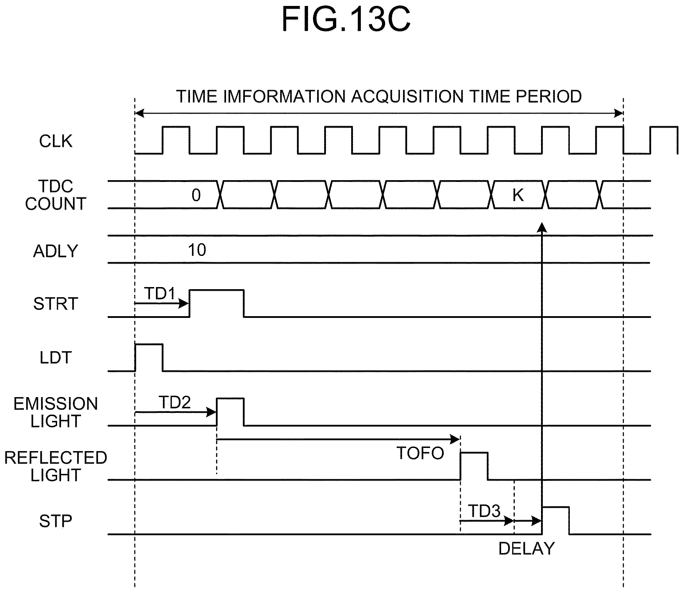

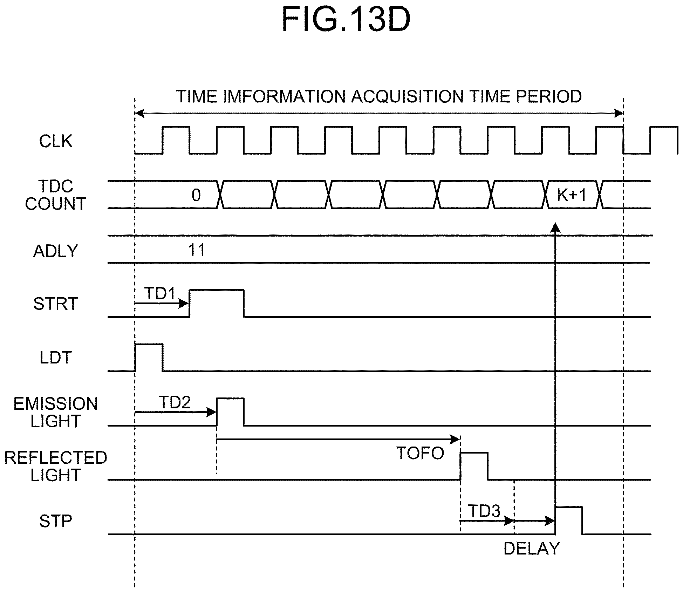

FIG. 13A to FIG. 13D are timing charts each illustrating an example of an operation according to the second embodiment. Furthermore, similarly to the example described above in the first embodiment, as illustrated in the respective drawings, the unit amount of delay used by the delay means 114B corresponds to an amount equal to 1/4 of the clock cycle, the delay information ADLY="00" indicates that the amount of delay DELAY is 0, the delay information ADLY="01" indicates that the amount of delay DELAY is an amount equal to 1/4 of the clock cycle, the delay information ADLY="10" indicates that the amount of delay DELAY is an amount equal to 2/4 of the clock cycle, and the delay information ADLY="11" indicates that the amount of delay DELAY is an amount equal to 3/4 of the clock cycle.

In the embodiment, because the measurement stop signal STP that is input to the time-to-digital converter circuit 111 is delayed by the delay means 114B, similarly to the first embodiment described above, a positive delay is added to the time period that is measured by the time-to-digital converter circuit 111. In the examples illustrated in FIG. 13A to FIG. 13D, similarly to the examples described above in the first embodiment, a combination of the time information OBJ="K" and the delay information ADLY="00", a combination of the time information OBJ="K" and the delay information ADLY="01", a combination of the time information OBJ="K" and the delay information ADLY="10", and a combination of the time information OBJ="K+1" and the delay information ADLY="11" are stored in and held by the storage unit 112. Similarly to the first embodiment described above, the signal processing unit 120 obtains the value corresponding to the optical time of flight TOFO by checking the combinations of the pieces of time information OBJ and the pieces of delay information ADLY that are stored in the storage unit 112 against the correspondence table illustrated in FIG. 8, so that the signal processing unit 120 is able to obtain the ranging information with the resolution of 1/4 of the clock cycle.

Furthermore, in the second embodiment, at Step S10 indicated by the flowchart illustrated in FIG. 9 described above, the delay means 114B sets delay time to, for example, the measurement stop signal STP.

As described above, according to the embodiment, in each of a case in which a delay is added by the delay means 114B and a case in which a delay is not added by the delay means 114B, the time information OBJ that indicates the time period measured by the time-to-digital converter circuit 111 is associated with the delay information ADLY that indicates the amount of delay DELAY to be added by the delay means 114B and the associated time information OBJ and the delay information ADLY are stored in the storage unit 112. Then, the distance D to the object to be measured 200 is calculated on the bases of the combinations of the pieces of time information OBJ and the pieces of delay information ADLY that are stored in the storage unit 112. Consequently, similarly to the first embodiment described above, it is possible to improve the resolution of the distance to be measured without increasing the clock frequency.

Furthermore, in the embodiment, the delay means 114B is needed for each of the plurality of the time-to-digital converter circuits 111 that are associated with the plurality of the light receiving units 102; however, the DLL itself included in the delay means 114B to be used may be a single DLL that is shared by the delay means 114B. By using the DLL common to the plurality of the delay means 114B, it is possible to effectively prevent inconvenience, such as complicated circuit configuration.

Furthermore, the second embodiment described above, the unit amount of delay used by the delay means 114B is assumed as an amount equal to 1/4 of the clock cycle; however, the example is not limited to this as long as the unit amount of delay used by the delay means 114B is different from the value of the clock cycle. For example, as described above in the modification of the first embodiment, it may also be possible to improve the resolution by using vernier caliper principle.

<Third Embodiment>

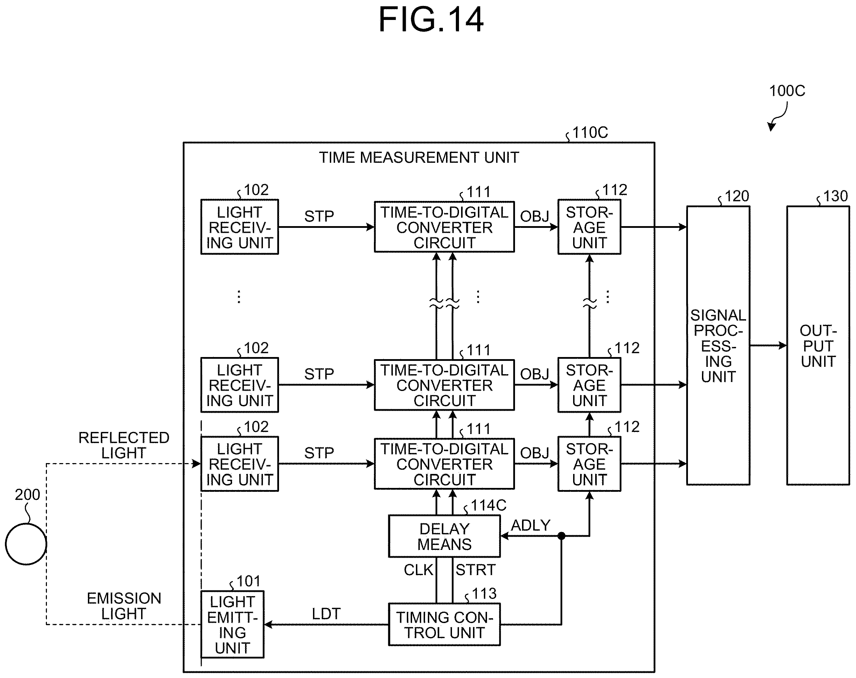

In the following, a third embodiment according to the present disclosure will be described. FIG. 14 is a block diagram illustrating a configuration example of a ranging apparatus 100C according to the third embodiment. In the embodiment, as illustrated in FIG. 14, a delay means 114C is arranged on the paths of the clock CLK and the measurement start signal STRT that are supplied from the timing control unit 113 to the time-to-digital converter circuit 111. The delay means 114C delays the timing, at which the clock CLK and the measurement start signal STRT are supplied to the time-to-digital converter circuit 111, in accordance with the amount of delay DELAY indicated by the delay information ADLY, so that the delay means 114C adds a negative delay to the time period (the time period between a time point at which the timing control unit 113 outputs the trigger signal LDT and a time point at which the measurement stop signal STP is input to the time-to-digital converter circuit 111) that is measured by the time-to-digital converter circuit 111. The configurations of the other components included in the ranging apparatus 100C according to the third embodiment are the same as those in the ranging apparatus 100A according to the first embodiment.

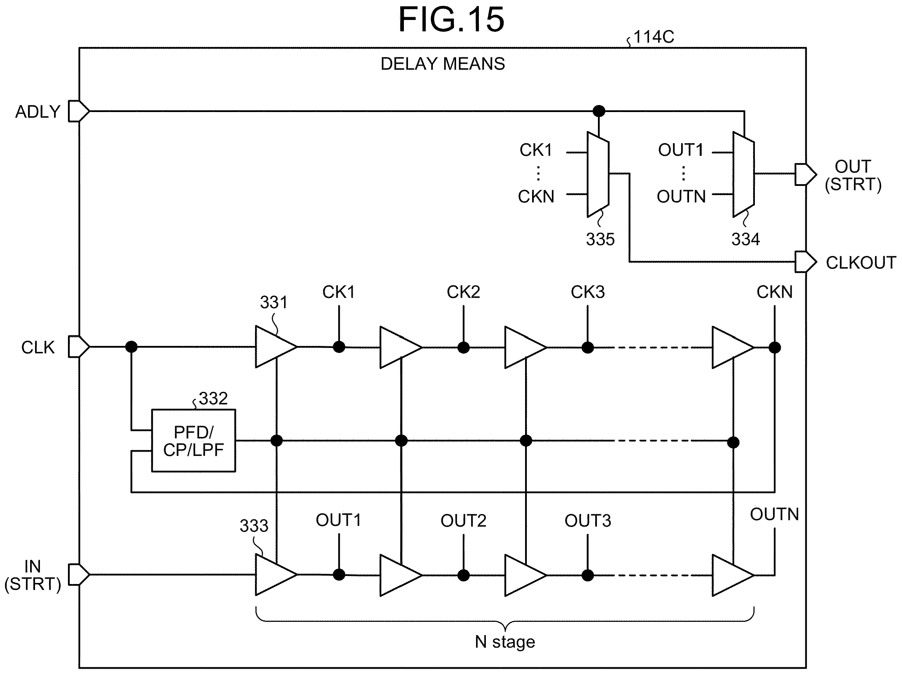

FIG. 15 is a schematic diagram illustrating an example of the delay means 114C according to the embodiment. The delay means 114C illustrated in FIG. 15 has the same configuration as that of the delay means 114A according to the first embodiment illustrated in FIG. 6; however, the signal that is input to the input terminal IN and that is output from the output terminal OUT is the measurement start signal STRT, instead of the trigger signal LDT. Furthermore, the configuration of the delay means 114C is different from the configuration of the delay means 114A described in the first embodiment in that the clock CLK itself supplied to the DLL is also output from a delay stage. Namely, a single delay output out of N-stage delay outputs is selected by the selector 334 and a selector 335 on the basis of the delay information ADLY, the measurement start signal STRT that is delayed by the amount of delay DELAY in accordance with the delay information ADLY is output from the output terminal OUT, and the clock CLK that is delayed by the amount of delay DELAY in accordance with the delay information ADLY is output from the output terminal CLKOUT and supplied to the time-to-digital converter circuit 111.

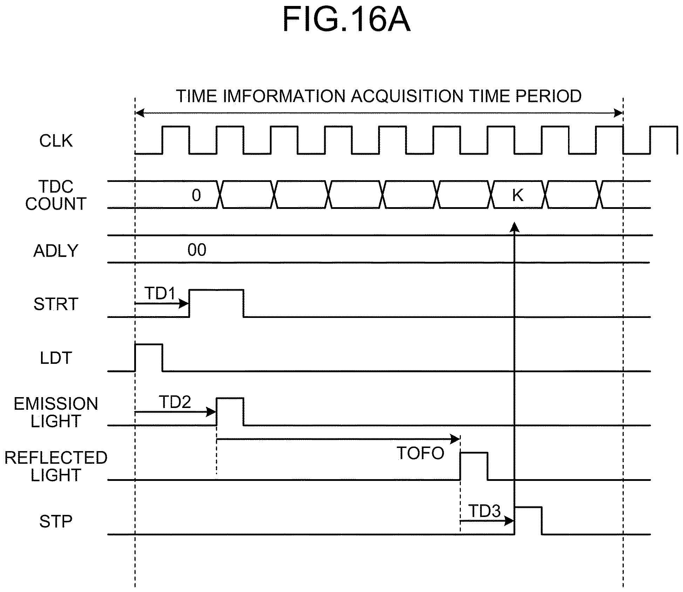

An example of an operation according to the third embodiment will be described with reference to the timing charts illustrated in FIG. 16A to FIG. 16D. Here, similarly to the examples described above in the first embodiment, it is assumed that the unit amount of delay of the delay means 114C is an amount equal to 1/4 of the clock cycle. As illustrated in the respective drawings, the delay information ADLY="00" indicates that the amount of delay DELAY is 0, the delay information ADLY="01" indicates that the amount of delay DELAY is an amount equal to 1/4 of the clock cycle, the delay information ADLY="10" indicates that the amount of delay DELAY is an amount equal to 2/4 of the clock cycle and the delay information ADLY="11" indicates that the amount of delay DELAY is an amount equal to 3/4 of the clock cycle.

First, an operation performed in a case in which the delay information ADLY is "00" will be described with reference to FIG. 16A. If the clock CLK and the measurement start signal STRT are input from the timing control unit 113, the time-to-digital converter circuit 111 starts a count operation. At this time, because the delay information ADLY is "00", the clock CLK and the measurement start signal STRT are supplied to the time-to-digital converter circuit 111 without being delayed by the delay means 114C. Furthermore, if, due to the trigger signal LDT that is in synchronization with the measurement start signal STRT, the object to be measured 200 is irradiated with emission light that is emitted from the light emitting unit 101 and the reflected light from the object to be measured 200 is received by the light receiving unit 102, the measurement stop signal STP is generated and is input to the time-to-digital converter circuit 111. The time-to-digital converter circuit 111 latches the count value of the time point at which the measurement stop signal STP is input, and then, performs binary conversion on the latched count value, and outputs the converted value as the time information OBJ that is digital data.

In the example illustrated in FIG. 16A, the value of "K" is obtained as the time information OBJ by the time-to-digital converter circuit 111. Therefore, the time information OBJ="K" is stored in and held by the storage unit 112 in association with the delay information ADLY="00".

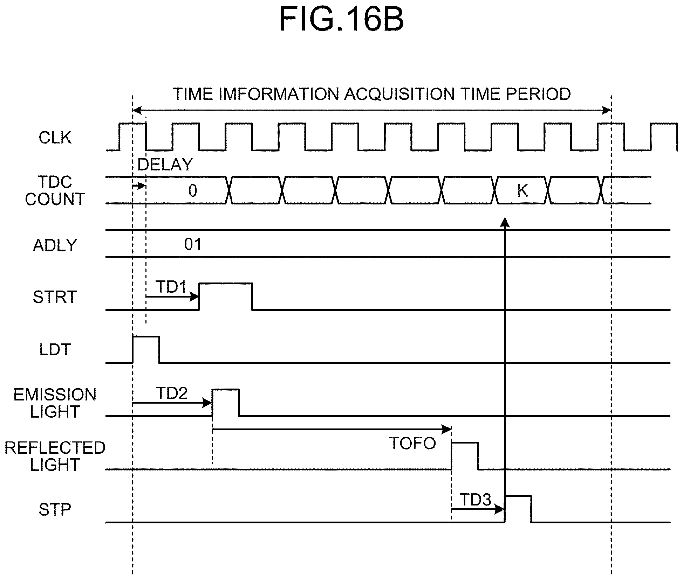

In the following, an operation performed in a case in which the delay information ADLY is "01" will be described with reference to FIG. 16B. In the delay means 114B, in accordance with the delay information ADLY="01", the amount of delay DELAY corresponding to an amount equal to 1/4 of the clock cycle (an amount equal to a single unit of the unit amount of delay) is added to the clock CLK and the measurement start signal STRT, and the clock CLK and the measurement start signal STRT are supplied to the time-to-digital converter circuit 111 by being delayed by an amount equal to 1/4 of the clock cycle. Consequently, the start of the count operation performed by the time-to-digital converter circuit 111 is delayed by an amount equal to 1/4 of the clock cycle, and, as a result, the time period measured by the time-to-digital converter circuit 111 is reduced by an amount equal to 1/4 of the clock cycle. Namely, a negative delay that corresponds to an amount equal to 1/4 of the clock cycle is added to the time period that is measured by the time-to-digital converter circuit 111. However, in the example illustrated in FIG. 16B, the time information OBJ that indicates the count value that is latched by the time-to-digital converter circuit 111 remains "K"; therefore, the time information OBJ="K" is stored in and held by the storage unit 112 in association with the delay information ADLY="01".

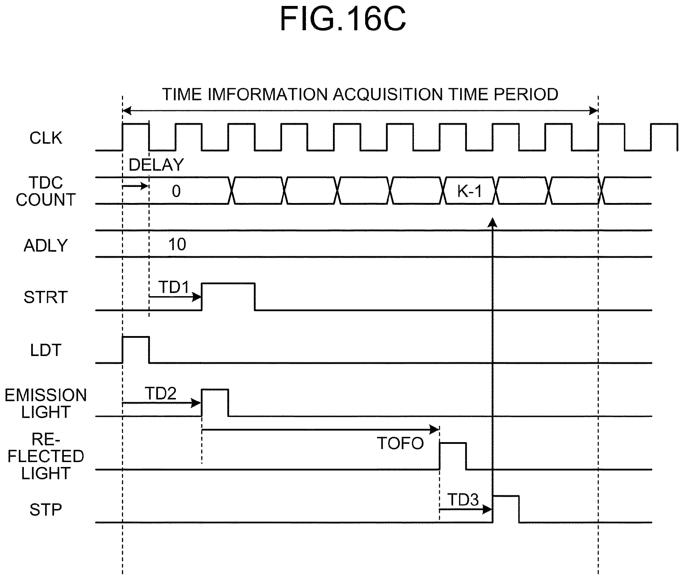

In the following, an operation performed in a case in which the delay information ADLY is "10" will be described with reference to FIG. 16C. In the delay means 114C, in accordance with the delay information ADLY="01", the amount of delay DELAY corresponding to an amount equal to 2/4 of the clock cycle (an amount equal to two units of the unit amount of delay) is added to the clock CLK and the measurement start signal STRT, and the clock CLK and the measurement start signal STRT are supplied to the time-to-digital converter circuit 111 by being delayed by an amount equal to 2/4 of the clock cycle. Consequently, the start of the count operation performed by the time-to-digital converter circuit 111 is delayed by an amount equal to 2/4 of the clock cycle, and, as a result, the time period measured by the time-to-digital converter circuit 111 is reduced by an amount equal to 2/4 of the clock cycle. Namely, a negative delay that corresponds to an amount equal to 2/4 of the clock cycle is added to the time point measured by the time-to-digital converter circuit 111. Here, in the example illustrated in FIG. 16C, the time information OBJ that indicates the count value latched by the time-to-digital converter circuit 111 is "K-1". Consequently, the time information OBJ="K-1" is stored in and held by the storage unit 112 in association with the delay information ADLY="10".

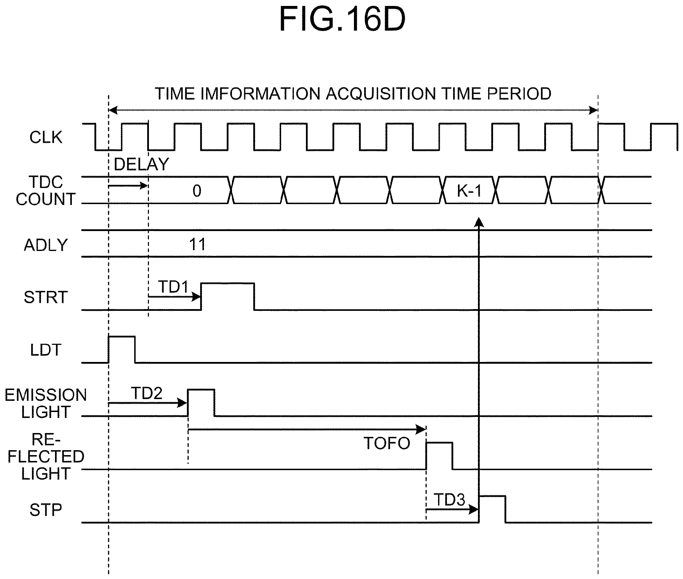

In the following, an operation performed in a case in which the delay information ADLY is "11" will be described with reference to FIG. 16D. In the delay means 114C, in accordance with the delay information ADLY="11", the amount of delay DELAY corresponding to an amount equal to an amount of 3/4 of the clock cycle (an amount equal to three units of the unit amount of delay) is added to the clock CLK and the measurement start signal STRT, and the clock CLK and the measurement start signal STRT are supplied to the time-to-digital converter circuit 111 by being delayed by an amount equal to 3/4 of the clock cycle. Consequently, a start of the count operation performed by the time-to-digital converter circuit 111 is delayed by an amount equal to 3/4 of the clock cycle, and, as a result, the time period measured by the time-to-digital converter circuit 111 is reduced by an amount equal to 3/4 of the clock cycle. Namely, a negative delay corresponding to an amount equal to 3/4 of the clock cycle is added to the time period measured by the time-to-digital converter circuit 111. Here, in the example illustrated in FIG. 16D, the time information OBJ that indicates the count value latched by the time-to-digital converter circuit 111 is "K-1". Consequently, the time information OBJ="K-1" is stored in and held by the storage unit 112 in association with the delay information ADLY="11".

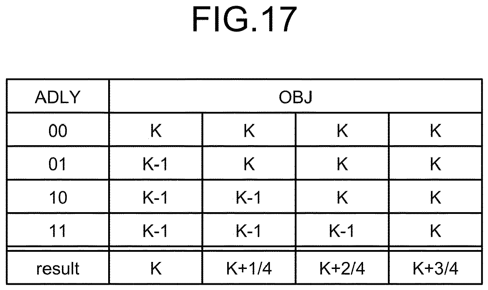

The signal processing unit 120 is able to obtain the value corresponding to the optical time of flight TOFO by checking the combinations of the pieces of time information OBJ and the pieces of delay information ADLY stored in the storage unit 112 by the operation described above with reference to FIG. 16A to FIG. 16D against the correspondence table illustrated in FIG. 17 and acquire the ranging information with the resolution of 1/4 of the clock cycle. Namely, pieces of 2-bit information of 0, 1/4, 2/4, and 3/4 are added as information indicating after the decimal point on the basis of the value of the delay information ADLY that is associated with the time information OBJ transits from "K" to "K-1". As a result, it is possible to acquire the ranging information indicated with the resolution of 1/4 of the clock cycle. In each of the examples indicated by FIG. 16A to FIG. 16D, the value corresponding to the optical time of flight TOFO is K+1/4.

Furthermore, in the third embodiment, at Step S10 indicated in the flowchart described above with reference to FIG. 9, the delay means 114C sets a delay time to, for example, the clock CLK and the measurement start signal STRT.

As described above, according to the embodiment, in each of the case in which a delay is added by the delay means 114C and the case in which a delay is not added by the delay means 114C, the time information OBJ that indicates the time period measured by the time-to-digital converter circuit 111 is stored in the storage unit 112 in association with the delay information ADLY that indicates the amount of delay DELAY to be added by the delay means 114C. Then, the distance D to the object to be measured 200 is calculated on the basis of the combinations of the pieces of time information OBJ and the pieces of delay information ADLY stored in the storage unit 112. Consequently, similarly to each of the embodiments described above, it is possible to improve the resolution of the distance to be measured without increasing the clock frequency.

Furthermore, in the embodiment, because the delay means 114C is applied to the clock CLK and the measurement start signal STRT in a shared manner, even in a configuration in which the plurality of the time-to-digital converter circuits 111 are provided by being associated with the plurality of the light receiving units 102, an amount of delay to be added by the delay means 114C is managed by using only a single block, and it is thus possible to apply uniform delays on a plane with a simple configuration.

Furthermore, in the third embodiment described above, the unit amount of delay used by the delay means 114C is assumed as an amount equal to 1/4 of the clock cycle; however, the example is not limited to this as long as the unit amount of delay used by the delay means 114C is a value that is different from the clock cycle. For example, as described above in the modification of the first embodiment, it may also be possible to improve the resolution by using vernier caliper principle.

<Fourth Embodiment>

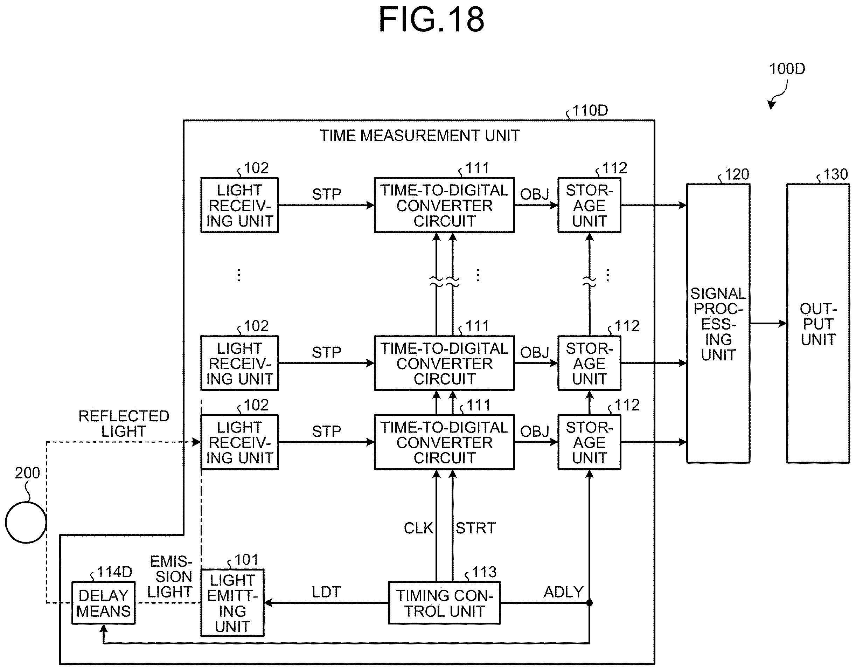

In the following, a fourth embodiment of the present disclosure will be described. FIG. 18 is a block diagram illustrating a configuration example of a ranging apparatus 100D according to the fourth embodiment. In the embodiment, as illustrated in FIG. 18, a delay means 114D is arranged on an optical path of the emission light that is emitted from the light emitting unit 101. The delay means 114D adds a positive delay to the time period (the time period between a time point at which the timing control unit 113 outputs the trigger signal LDT and a time point at which the measurement stop signal STP is input to the time-to-digital converter circuit 111) measured by the time-to-digital converter circuit 111 by extending, in accordance with the amount of delay DELAY indicated by the delay information ADLY, an optical path length between a position at which light is emitted by the light emitting unit 101 and a position at which the light is emitted outside the ranging apparatus 100D. The configurations of the other components included in the ranging apparatus 100D according to the fourth embodiment are the same as those included in the ranging apparatus 100A according to the first embodiment.

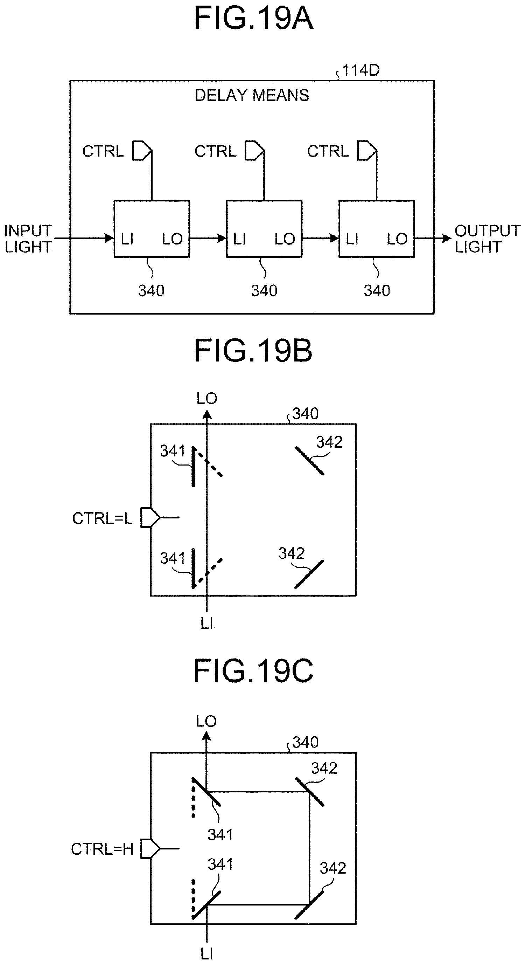

FIG. 19A to FIG. 19C are schematic diagrams each illustrating an example of the delay means 114D according to the embodiment. As illustrated in FIG. 19A, the delay means 114D is configured by coupling delay cells 340 in a plurality of stages. As illustrated in FIG. 19B and FIG. 19C, the delay cell 340 includes two movable mirrors 341 that is operated in accordance with a control signal CTRL and two stationary mirrors 342. the two movable mirrors 341 are arranged so as to pass light when the control signal CTRL=L (see FIG. 19B) and reflect light at an angle of 90 degrees when the control signal CTRL=H (see FIG. 19C). The two stationary mirrors 342 are arranged such that one of the two stationary mirrors 342 reflects the light, which is reflected by one of the movable mirrors 341, at an angle of 90 degrees, and the other one of the two stationary mirrors 342 further reflects the light, which is reflected by the one of the two stationary mirrors 342, at an angle of 90 degrees so as to guide the light to the other one of the two movable mirrors 341. Furthermore, the movable mirrors 341 and the stationary mirrors 342 may also be mounted on a semiconductor substrate by using micro-electromechanical systems (MEMS) technology.

When the control signal CTRL=H, each of the delay cells 340 constituting the delay means 114D extends the optical path length of the light passing through the interior of the delay cell 340 by a length of L than in a case where the control signal CTRL=L. Namely, if a speed of light is denoted by c, when the control signal CTRL=H, the light entered from an input window LI of the delay cell 340 is output from an output window LO by being delayed by an amount equal to L/c when compared with a case where the control signal CTRL=L. For example, if 4-stage delay control is performed on the basis of assumption that the unit amount of delay used by the delay means 114D is equal to an amount of 1/4 of the clock cycle, three stages of the delay cells 340, in which the positions of the two movable mirrors 341 and the two stationary mirrors 342 are adjusted such that L/c is equal to an amount of 1/4 of the clock cycle, are coupled. Then, in accordance with the delay information ADLY, the number of the delay cells 340 in the state of the control signal CTR=H is determined. Namely, by switching the number of the delay cells 340 in the state of the control signal CTR=H to 0, 1, 2, or 3, it is possible to switch the amount of delay DLAY to be added by the delay means 114D to four stages, i.e., 0, an amount equal to 1/4 of the clock cycle, an amount equal to 2/4 of the clock cycle, and an amount equal to 3/4 of the clock cycle.

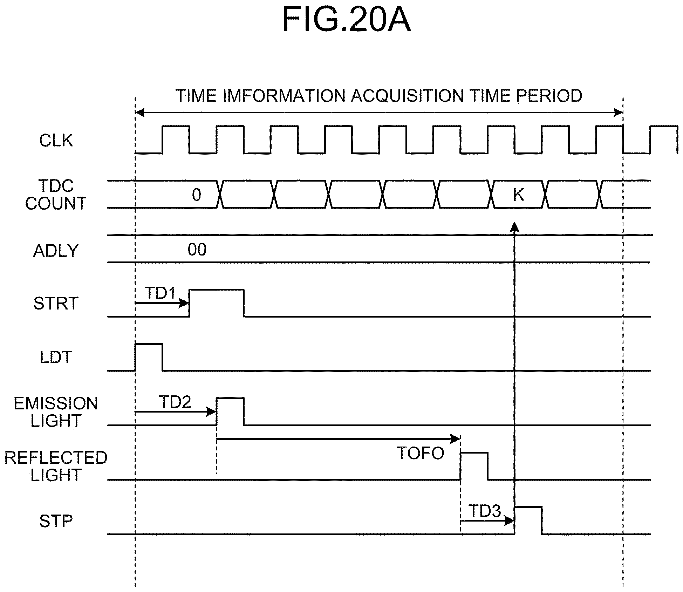

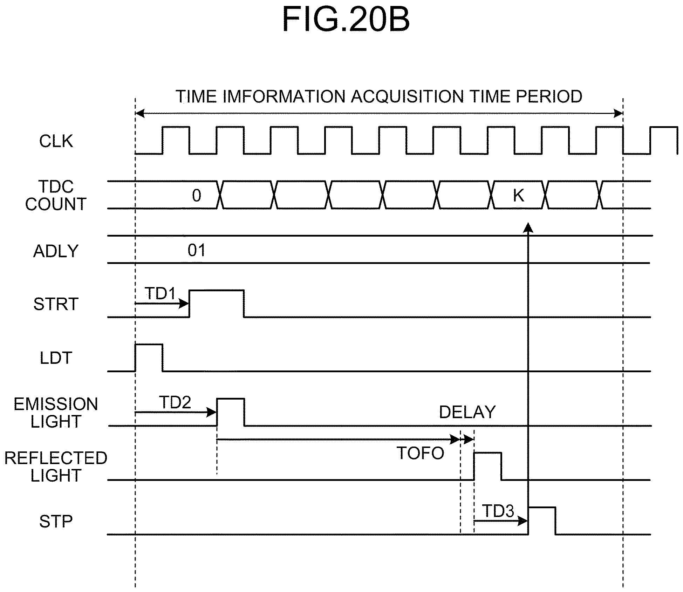

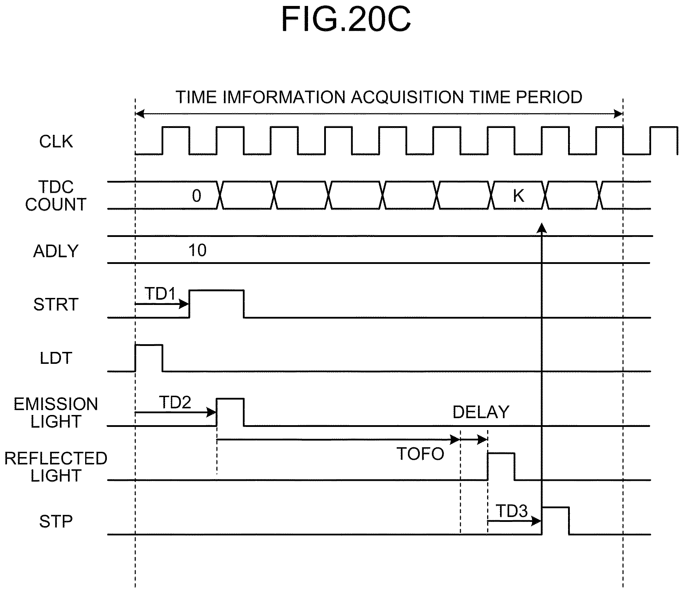

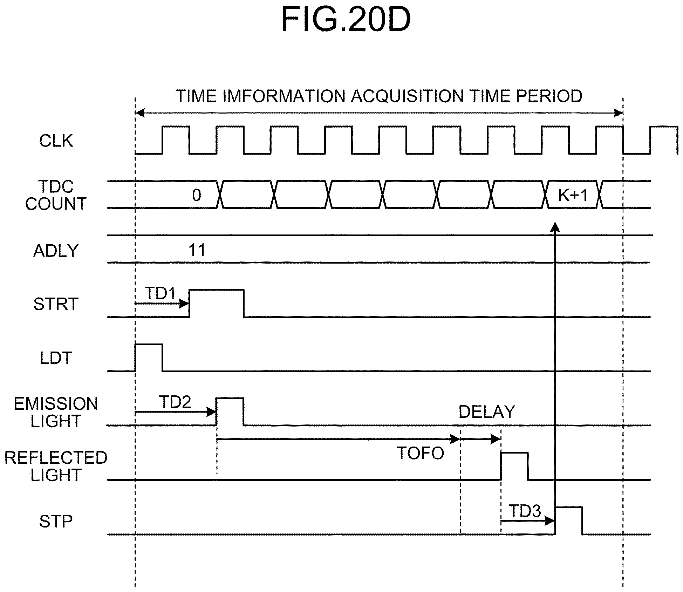

FIG. 20A to FIG. 20D are timing charts each illustrating an example of an operation according to the fourth embodiment. Furthermore, similarly to the example described above in the first embodiment, as illustrated in the respective drawings, the unit amount of delay of the delay means 114D is equal to an amount of 1/4 of the clock cycle, the delay information ADLY="00" indicates that the amount of delay DELAY is 0, the delay information ADLY="01" indicates that the amount of delay DELAY is equal to an amount of 1/4 of the clock cycle, the delay information ADLY="10" indicates that the amount of delay DELAY is equal to an amount of 2/4 of the clock cycle, and the delay information ADLY="11" indicates that the amount of delay DELAY is equal to an amount of 3/4 of the clock cycle.

In the embodiment, an optical path length between a point at which the light is emitted from the light emitting unit 101 and a point at which the light is emitted outside the ranging apparatus 100D is extended by the delay means 114D, and a timing at which the reflected light that is reflected by the object to be measured 200 is received by the light receiving unit 102 is delayed, so that, similarly to the first embodiment described above, a positive delay is added to the time period measured by the time-to-digital converter circuit 111. In the examples illustrated in FIG. 20A to FIG. 20D, similarly to the examples described above in the first embodiment, a combination of the time information OBJ="K" and the delay information ADLY="00", a combination of the time information OBJ="K" and the delay information ADLY="01", a combination of the time information OBJ="K" and the delay information ADLY="10", and a combination of the time information OBJ="K+1" and the delay information ADLY="11" are stored in and held by the storage unit 112. Similarly to the first embodiment described above, the signal processing unit 120 is able to obtain the ranging information with the resolution of an amount equal to 1/4 of the clock cycle by checking the combinations of the pieces of time information OBJ and the pieces of delay information ADLY stored in the storage unit 112 against the correspondence table illustrated in FIG. 8 and obtaining the value corresponding to the optical time of flight TOFO.

Furthermore, in the fourth embodiment, at Step S10 indicated by the flowchart illustrated in FIG. 9 described above, the delay means 114D sets a delay time by controlling, for example, the delay cells 340.

As described above, according to the embodiment, in each of the case in which a delay is added by the delay means 114D and the case in which a delay is not added by the delay means 114D, the time information OBJ that indicates the time period measured by the time-to-digital converter circuit 111 is associated with the delay information ADLY that indicates the amount of delay DELAY to be added by the delay means 114D and the associated time information OBJ and the delay information ADLY are stored in the storage unit 112. Then, the distance D to the object to be measured 200 is calculated on the basis of the combinations of the pieces of time information OBJ and the pieces of delay information ADLY that are stored in the storage unit 112. Consequently, similarly to each of the embodiments described above, it is possible to improve the resolution of the distance to be measured without increasing the clock frequency.

Furthermore, in the embodiment, a configuration is constructed such that the delay means 114D adds a positive delay to the time period measured by the time-to-digital converter circuit 111 by extending the optical path length between a point at which the light is emitted from the light emitting unit 101 and a point at which the light is emitted outside the ranging apparatus 100D; therefore, there is no need to use an always-on electronic circuit, and it is thus possible to reduce the electrical power consumption. Furthermore, because delay control is performed by using a mechanical optical path length and this is advantageous in that it is less affected by a power supply voltage or an environmental temperature applied to the ranging apparatus 100D.

Furthermore, in the fourth embodiment described above, the unit amount of delay used by the delay means 114D is assumed as an amount equal to 1/4 of the clock cycle; however, the example is not limited to this as long as the unit amount of delay used by the delay means 114D is a value that is different from the clock cycle. For example, as described above in the modification of the first embodiment, it may also be possible to improve the resolution by using vernier caliper principle.

Furthermore, the delay means 114D described above is configured to perform multistage delay control by coupling the delay cells 340, in a plurality of stages, each of which includes the two movable mirrors 341 and the two stationary mirrors 342; however, the configuration is not limited to this. The delay means 114D may also be configured to add a positive delay to the time period measured by the time-to-digital converter circuit 111 by extending the optical path length between the light emitting unit 101 and the light receiving unit 102.

<Fifth Embodiment>

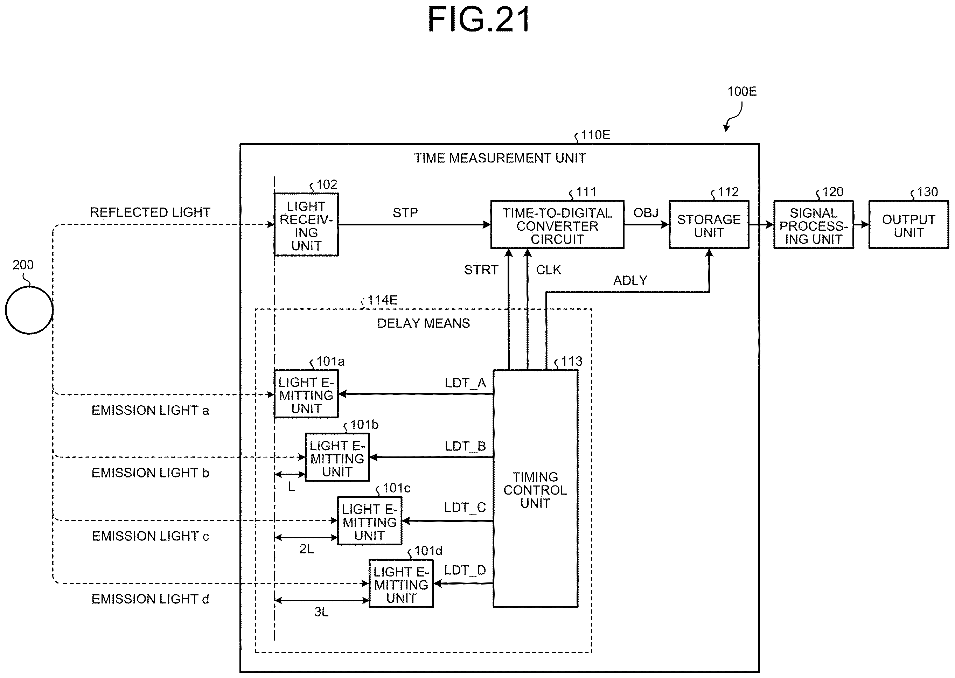

In the following, a fifth embodiment according to the present disclosure will be described. FIG. 21 is a block diagram illustrating a configuration example of a ranging apparatus 100E according to the fifth embodiment. Furthermore, to simplify the explanation, a single piece of the light receiving unit 102 is illustrated; however, it is assumed that a plurality of the light receiving units 102 are arrayed. In the embodiment, as illustrated in FIG. 21, a plurality of light emitting units 101a, 101b, 101c, and 101d are arranged at different positions in the direction of the optical axis of emission light so as to have different optical path lengths to the object to be measured 200 for each predetermined amount L. The plurality of the light emitting units 101a, 101b, 101c, and 101d receive trigger signals LDT_A, LDT_B, LDT_C, and LDT_D, respectively, as an separate input and are able to independently operate each other. Namely, by selectively outputting one of the trigger signals LDT_A, LDT_B, LDT_C, and LDT_D, the timing control unit 113 is able to switch the light emitting unit 101 from among the plurality of the light emitting units 101a, 101b, 101c, and 101d.

Here, if a speed of light is denoted by c, when a time period between a time point at which emission light a is emitted from the light emitting unit 101a and a time point at which the emission light a arrives at the object to be measured 200 is used as a reference, an arrival of emission light b from the light emitting unit 101b is delayed by an amount equal to L/c, an arrival of emission light c from the light emitting unit 101c is delayed by an amount equal to 2L/c, and an arrival of emission light d from the light emitting unit 101d is delayed by an amount equal to 3L/c. Therefore, for example, the plurality of the light emitting units 101a, 101b, 101c, and 101d are arranged such that the amount of L/c is equal to an amount of 1/4 of the clock cycle, and the timing control unit 113 switches the light emitting unit 101 that emits light, so that, similarly to each of the embodiments described above, it is possible to perform four-stage delay control including the amount of delay DLAY=0 by using the unit amount of delay as an amount equal to 1/4 of the clock cycle. Namely, in the embodiment, a delay means 114E is constructed by the plurality of the light emitting units 101a, 101b, 101c, and 101d and the timing control unit 113.

In the embodiment, a case in which light is emitted from the light emitting unit 101a corresponds to the delay information ADLY="00", a case in which light is emitted from the light emitting unit 101b corresponds to the delay information ADLY="01", a case in which light is emitted from the light emitting unit 101c corresponds to the delay information ADLY="10", and a case in which light is emitted from the light emitting unit 101d corresponds to the delay information ADLY="11". The operations according to the embodiment are the same as the examples described above in the fourth embodiment illustrated indicated by FIG. 20A to FIG. 20D. Namely, a combination of the time information OBJ="K" and the delay information ADLY="00", a combination of the time information OBJ="K" and the delay information ADLY="01", a combination of the time information OBJ="K" and the delay information ADLY="10", and a combination of the time information OBJ="K+1" and the delay information ADLY="11" are stored in and held by the storage unit 112. The signal processing unit 120 is able to acquire ranging information with the resolution of an amount equal to 1/4 of the clock cycle by checking the combinations of the pieces of time information OBJ and the pieces of delay information ADLY that are stored in the storage unit 112 against the correspondence table illustrated in FIG. 8 and obtaining a value that corresponds to the optical time of flight TOFO.

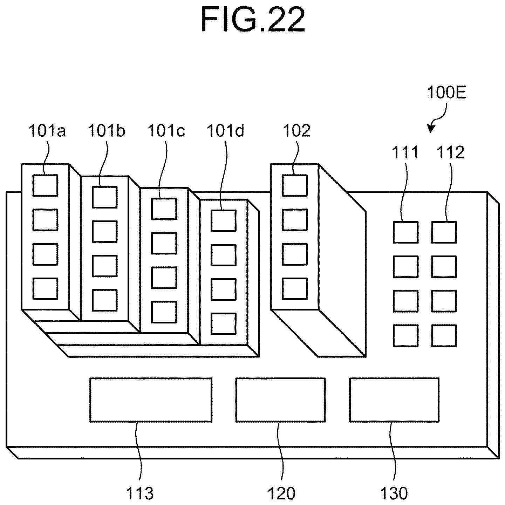

FIG. 22 is a diagram schematically illustrating an example of the structure of the ranging apparatus 100E according to the fifth embodiment. The plurality of the light emitting units 101a, 101b, 101c, and 101d that are vertical-cavity surface-emitting laser (VCSEL) arrays and that are formed on different substrates and are laminated to form optical path length differences L. In contrast, the light receiving unit 102, the time-to-digital converter circuit 111, the storage unit 112, the timing control unit 113, the signal processing unit 120, and the output unit 130 are formed on another semiconductor substrate, and thus, these three-dimensionally laminated units constitute the ranging apparatus 100E.

As described above, according to the embodiment, in each of a case in which a delay is added by the delay means 114E and a case in which a delay is not added by the delay means 114E, the time information OBJ that indicates the time period measured by the time-to-digital converter circuit 111 is associated with the delay information ADLY that indicates the amount of delay DELAY to be added by the delay means 114E and the associated time information OBJ and delay information ADLY are stored in the storage unit 112. Then, the distance D to the object to be measured 200 is calculated on the basis of the combinations of the pieces of time information OBJ and the pieces of delay information ADLY stored in the storage unit 112. Consequently, similarly to each of the embodiments described above, it is possible to improve the resolution of the distance to be measured without increasing the clock frequency.

Furthermore, in the fifth embodiment, at Step S10 indicated by the flowchart illustrated in FIG. 9 described above, for example, the delay time is set by the timing control unit 113 selectively outputting one of the trigger signals LD_A, LD_B, LD_C, and LD_D.

Furthermore, in the embodiment, a configuration is constructed such that the delay means 114E adds a positive delay to the time period measured by the time-to-digital converter circuit 111 by switching the light emitting unit 101 that is used to emit light from among the plurality of the light emitting units 101a, 101b, 101c, and 101d, and, similarly to the fourth embodiment described above, there is no need to use an always-on electronic circuit; therefore, it is possible to reduce the electrical power consumption. Furthermore, because delay control is performed by using a mechanical optical path length and this is advantageous in that it is less affected by a power supply voltage or an environmental temperature applied to the ranging apparatus 100E.

Furthermore, in the fifth embodiment described above, the unit amount of delay used by the delay means 114E is assumed as an amount equal to 1/4 of the clock cycle; however, the example is not limited to this as long as the unit amount of delay used by the delay means 114E is a value that is different from the clock cycle. For example, as described above in the modification of the first embodiment, it may also be possible to improve the resolution by using vernier caliper principle.

Furthermore, in the fifth embodiment described above, the light emitting units 101b, 101c, and 101d are arranged such that the optical path lengths thereof to the object to be measured 200 are increased by an amount equal to L, 2L, and 3L, respectively, relative to the light emitting unit 101a; however, it may also be possible to arrange the light emitting units 101b, 101c, and 101d such that the optical path lengths thereof to the object to be measured 200 are decreased by an amount equal to L, 2L, and 3L, respectively, relative to the light emitting unit 101a. In this case, a configuration is constructed such that the delay means 114E adds a negative delay to the time period measured by the time-to-digital converter circuit 111.

<Sixth Embodiment>

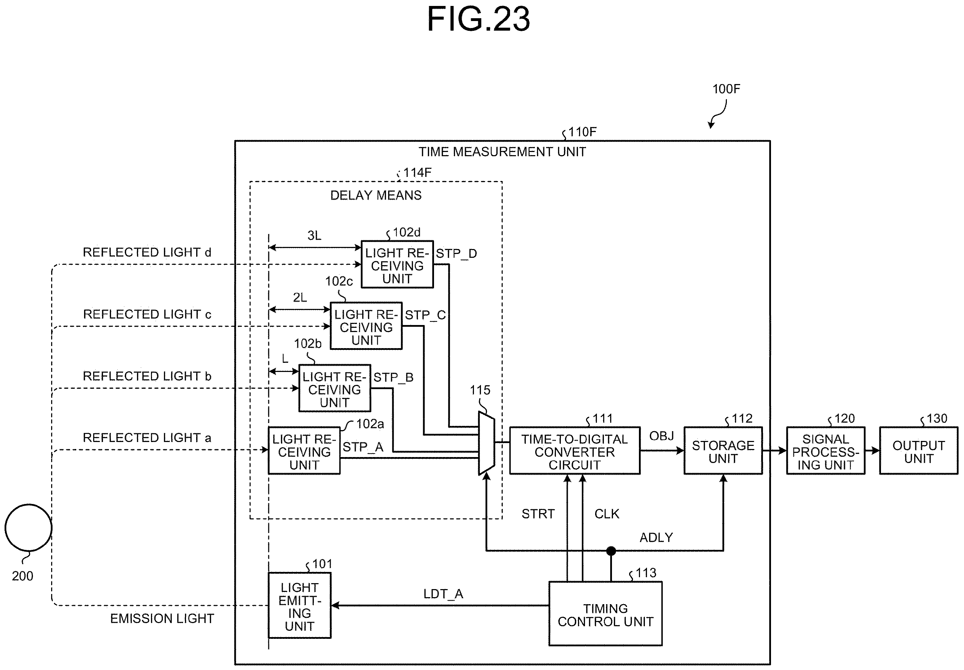

In the following, a sixth embodiment according to the present disclosure will be described. FIG. 23 is a block diagram illustrating a configuration example of a ranging apparatus 100F according to the sixth embodiment. In the embodiment, as illustrated in FIG. 23, a plurality of light receiving units 102a, 102b, 102c, and 102d are arranged at different positions along a direction in which the light is incident so as to have different optical path lengths to the object to be measured 200 for each predetermined amount L. Each of the output ends of the plurality of the light receiving units 102a, 102b, 102c, and 102d is connected to a selector 115. The selector 115 is able to switch the light receiving unit 102, which receives light that is used to perform ranging, by selectively allowing an output of one of the plurality of the light receiving units 102a, 102b, 102c, and 102d to enter an active state on the basis of the delay information ADLY that is supplied from the timing control unit 113.

Here, if a speed of light is denoted by c, by using a time period for which the reflected light a arrives at the light receiving unit 102a as a reference, reflected light b arrives at the light receiving unit 102b by being delayed by an amount equal to L/c, the reflected light c arrives at the light receiving unit 102c by being delayed by an amount equal to 2L/c, and the reflected light d arrives at the light receiving unit 102d by being delayed by an amount equal to 3L/c. Therefore, for example, the light receiving units 102a, 102b, 102c, and 102d are arranged such that L/c is equal to an amount of 1/4 of the clock cycle, and the light receiving unit 102 to be used is switched by the selector 115, so that, similarly to each of the embodiments, it is possible to perform four-stage delay control including the amount of delay DLAY=0 by using the unit amount of delay as an amount equal to 1/4 of the clock cycle. Namely, in the embodiment, a delay means 114F is constructed by the plurality of the light receiving units 102a, 102b, 102c, and 102d and the selector 115.

In the embodiment, in a case of the delay information ADLY="00", the selector 115 selects an output of the light receiving unit 102a; in a case of the delay information ADLY="01", the selector 115 selects an output of the light receiving unit 102b; in a case of the delay information ADLY="10", the selector 115 selects an output of the light receiving unit 102c; and in a case of the delay information ADLY="11", the selector 115 selects an output of the light receiving unit 102d. The operations according to the embodiment are the same as the examples described above in the fourth embodiment illustrated in FIG. 20A to FIG. 20D. Namely, a combination of the time information OBJ="K" and the delay information ADLY="00", a combination of the time information OBJ="K" and the delay information ADLY="01", a combination of the time information OBJ="K" and the delay information ADLY="10", and a combination of the time information OBJ="K+1" and the delay information ADLY="11" are stored in and held by the storage unit 112. The signal processing unit 120 is able to acquire ranging information with the resolution of an amount equal to 1/4 of the clock cycle by checking the combinations of the pieces of time information OBJ and the pieces of delay information ADLY that are stored in the storage unit 112 against the correspondence table illustrated in FIG. 8 and obtaining a value that corresponds to the optical time of flight TOFO.

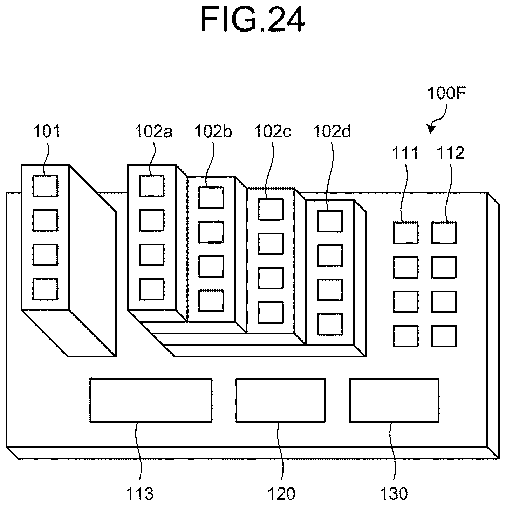

FIG. 24 is a diagram schematically illustrating an example of the structure of the ranging apparatus 100F according to the sixth embodiment. The plurality of the light receiving units 102a, 102b, 102c, and 102d are light receiving element arrays formed on different substrates and are laminated to form the optical path length differences L. In contrast, the light emitting unit 101, the time-to-digital converter circuit 111, the storage unit 112, the timing control unit 113, the signal processing unit 120, and the output unit 130 are formed on another semiconductor substrate, and thus, these three-dimensionally laminated units constitute the ranging apparatus 100F.

As described above, according to the embodiment, in each of a case in which a delay is added by the delay means 114F and a case in which a delay is not added by the delay means 114F, the time information OBJ that indicates the time period measured by the time-to-digital converter circuit 111 is associated with the delay information ADLY that indicates the amount of delay DELAY to be added by the delay means 114F and the associated time information OBJ and delay information ADLY are stored in the storage unit 112. Then, the distance D to the object to be measured 200 is calculated on the basis of the combinations of the pieces of time information OBJ and the pieces of delay information ADLY stored in the storage unit 112. Consequently, similarly to each of the embodiments described above, it is possible to improve the resolution of the distance to be measured without increasing the clock frequency.

Furthermore, in the embodiment, a configuration is constructed such that the delay means 114F adds a positive delay to the time period measured by the time-to-digital converter circuit 111 by switching the light receiving unit 102, from among the plurality of the light receiving units 102a, 102b, 102c, and 102d, that receives light that is used to perform ranging, and, similarly to the fourth embodiment or the fifth embodiment described above, there is no need to use an always-on electronic circuit; therefore, it is possible to reduce the electrical power consumption. Furthermore, because delay control is performed by using a mechanical optical path length and this is advantageous in that it is less affected by a power supply voltage or an environmental temperature applied to the ranging apparatus 100F.

Furthermore, in the sixth embodiment described above, the unit amount of delay used by the delay means 114F is assumed as an amount equal to 1/4 of the clock cycle; however, the example is not limited to this as long as the unit amount of delay used by the delay means 114F is a value that is different from the clock cycle. For example, as described above in the modification of the first embodiment, it may also be possible to improve the resolution by using vernier caliper principle.

Furthermore, in the sixth embodiment described above, the light receiving units 102b, 102c, and 102d are arranged such that the optical path lengths thereof to the object to be measured 200 is increased by an amount equal to L, 2L, and 3L, respectively, relative to the light receiving unit 102a; however, it may also be possible to arrange the light receiving units 102b, 102c, and 102d such that the optical path lengths thereof to the object to be measured 200 is decreased by an amount equal to L, 2L, and 3L, respectively, relative to the light receiving unit 102a. In this case, a configuration is constructed such that the delay means 114F adds a negative delay to the time period measured by the time-to-digital converter circuit 111.

<Application example of present disclosure>

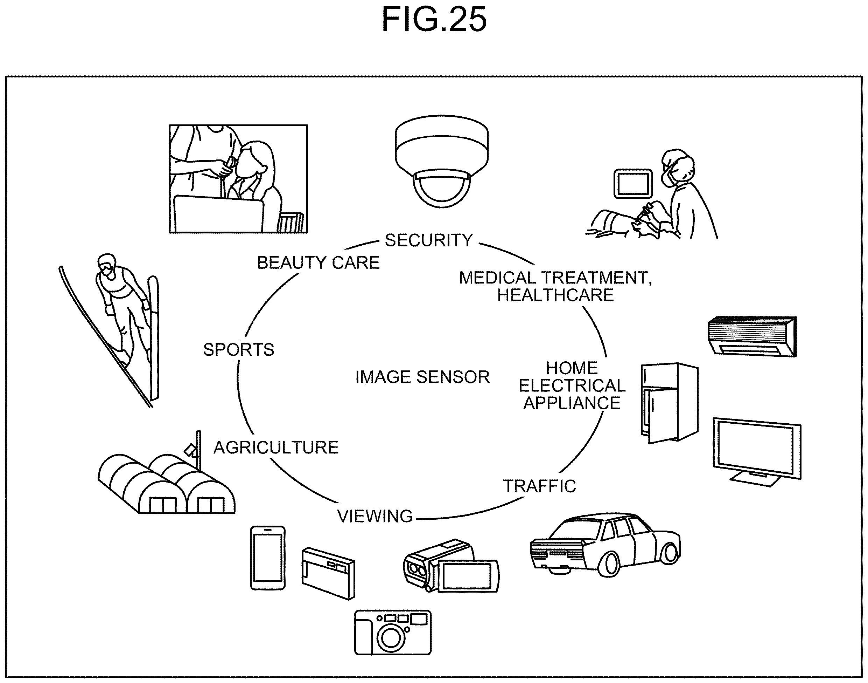

In the following, an application example of the present disclosure will be described. FIG. 25 is a use example of the ranging apparatus 100 used in each of the embodiments according to the present disclosure. The ranging apparatus 100 according to each of the embodiments described above are applicable to various cases in which, for example, light, such as visible light, infrared light, ultraviolet light, and X-ray, is sensed as described below.

- Devices, such as a digital camera and a mobile phone with a camera function, which capture images to be provided for viewing.
- Devices, such as an on-vehicle sensor that captures images of front, back, surroundings, and inside of a vehicle, a monitoring camera that monitors running vehicles and roads, and a ranging sensor that performs ranging on a distance between vehicles, which are used for traffic to ensure safety driving, such as automatic stop, or to recognize a state of a driver.
- Devices that are used for home electrical appliance, such as TV, a refrigerator, and an air conditioner, for capturing an image of a gesture of a user and operating devices in accordance with the gesture.
- Devices, such as an endoscope and a device that captures an image of blood vessels by receiving infrared light, which are used for medical treatment and healthcare.
- Devices, such as an anti-crime monitoring camera and a camera for person authentication, which are used for security.

- Devices, such as a skin measurement apparatus that captures an image of skin and a microscope that captures an image of scalp, which are used for beauty care.
- Devices, such as an action camera for sports and a wearable camera, which are used for sports.
- Devices, such as a camera for monitoring a state of fields and crops, which are used for agriculture.

<Example of application to movable body>

The technique according to the present disclosure may further be applied to a device that is mounted on various movable bodies, such as a vehicle, an electric vehicle, a hybrid electric vehicle, an automatic two-wheel vehicle, a bicycle, a personal mobility, an airplane, a drone, boats and ships, and a robot.

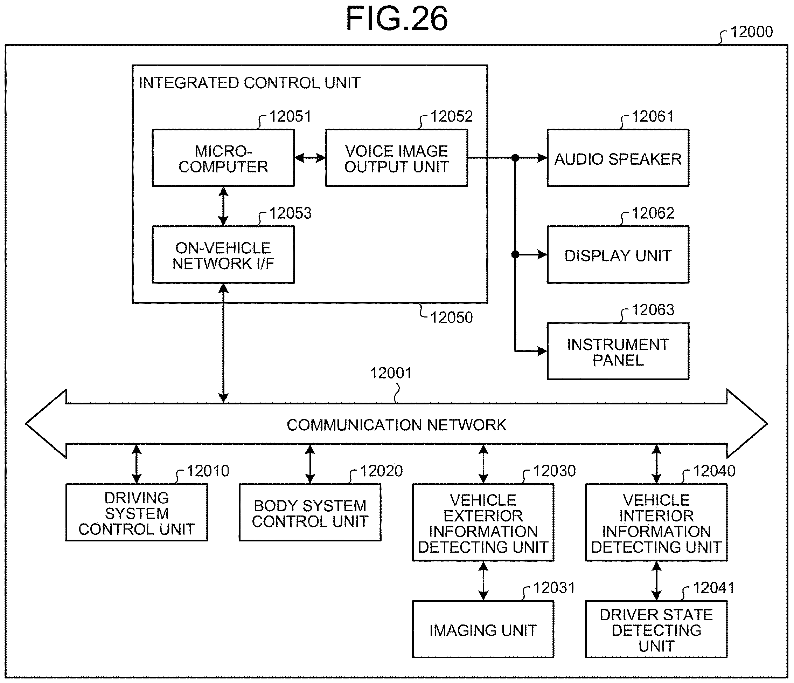

FIG. 26 is a block diagram illustrating a schematic configuration example of a vehicle control system that is an example of a movable body control system to which the technique according to the present disclosure is applicable. A vehicle control system 12000 includes a plurality of electronic control units that are connected to each another via a communication network 12001. In the example illustrated in FIG. 26, the vehicle control system 12000 includes a driving system control unit 12010, a body system control unit 12020, a vehicle exterior information detecting unit 12030, a vehicle interior information detecting unit 12040, and an integrated control unit 12050. Furthermore, as a functional configuration of the integrated control unit 12050, a microcomputer 12051, a voice image output unit 12052, and an on-vehicle network interface (I/F) 12053 are illustrated.

The driving system control unit 12010 controls operation of devices related to a driving system of a vehicle in accordance with various programs. For example, the driving system control unit 12010 functions as a control device for a driving force generating device, such as an internal combustion engine or a driving motor, that generates a driving force of the vehicle, a driving force transmission mechanism for transmitting the driving force to wheels, a steering mechanism for adjusting a rudder angle of the vehicle, and a braking device that generates a braking force of the vehicle.

The body system control unit 12020 controls operation of various devices mounted on a vehicle body in accordance with various programs. For example, the body system control unit 12020 functions as a control device for a keyless entry system, a smart key system, a power window device, and various lamps, such as a head lamp, a back lamp, a brake lamp, a direction indicator, and a fog lamp. In this case, radio waves transmitted from a mobile terminal that is used as a substitute for a key or signals from various switches may be input to the body system control unit 12020. The body system control unit 12020 receives input of the radio waves or the signals, and controls a door lock device, a power window device, lamps, and the like of the vehicle.

The vehicle exterior information detecting unit 12030 detects information on the outside of the vehicle on which the vehicle control system 12000 is mounted. For example, an imaging unit 12031 is connected to the vehicle exterior information detecting unit 12030. The vehicle exterior information detecting unit 12030 allows the imaging unit 12031 to capture an image of the outside of the vehicle, and receives the captured image. The vehicle exterior information detecting unit 12030 may perform an object detection process or a distance detection process on a person, a vehicle, an obstacle, a sign, or characters on a road, on the basis of the received image. For example, the vehicle exterior information detecting unit 12030 performs image processing on the received image, and performs the object detection process or the distance detection process on the basis of a result of the image processing.

The imaging unit 12031 is an optical sensor that receives light and outputs an electrical signal in accordance with the intensity of the received light. The imaging unit 12031 is also able to output the electrical signal as an image or information on a measured distance. Furthermore, the light that is received by the imaging unit 12031 may also be visible light or non-visible light, such as infrared light.

The vehicle interior information detecting unit 12040 detects information on the inside of the vehicle. For example, a driver state detecting unit 12041 that detects a state of a driver is connected to the vehicle interior information detecting unit 12040. The driver state detecting unit 12041 includes a camera that captures an image of, for example, the driver and the vehicle interior information detecting unit 12040 may also calculate a degree of fatigue or a degree of concentration of the driver or may also determine whether the driver is sleeping on the basis of detection information that is input from the driver state detecting unit 12041.

The microcomputer 12051 is able to calculate a control target value of the driving force generating device, the steering mechanism, or the braking device on the basis of the information on the outside or the inside of the vehicle that is acquired by the vehicle exterior information detecting unit 12030 or the vehicle interior information detecting unit 12040, and issue a control command to the driving system control unit 12010. For example, the microcomputer 12051 is able to perform cooperation control to realize an advance driver assistance system (ADAS) function including vehicle crash avoidance, vehicle impact relaxation, following traveling on the basis of an inter-vehicular distance, vehicle crash warning, or vehicle lane deviation warning.

Furthermore, the microcomputer 12051 is able to perform cooperation control aiming at automatic driving in which a vehicle autonomously travels independent of operation of a driver for example, by controlling the driving force generating device, the steering mechanism, the braking device, or the like on the basis of information on the surroundings of the vehicle that is acquired by the vehicle exterior information detecting unit 12030 or the vehicle interior information detecting unit 12040.

Furthermore, the microcomputer 12051 is able to output a control command to the body system control unit 12020 on the basis of the information on the outside of the vehicle that is acquired by the vehicle exterior information detecting unit 12030. For example, the microcomputer 12051 is able to control the head lamp in accordance with a position of a preceding vehicle or an oncoming vehicle detected by the vehicle exterior information detecting unit 12030, and is able to perform cooperation control to implement anti-glare, such as switching from high beam to low beam.

The voice image output unit 12052 sends an output signal of at least one of voice and an image to an output device capable of visually or aurally information to a passenger of the vehicle or to the outside of the vehicle. In the example in FIG. 19, an audio speaker 12061, a display unit 12062, and an instrument panel 12063 are illustrated as examples of the output device. The display unit 12062 may also include, for example, at least one of an on-board display and a head-up display.

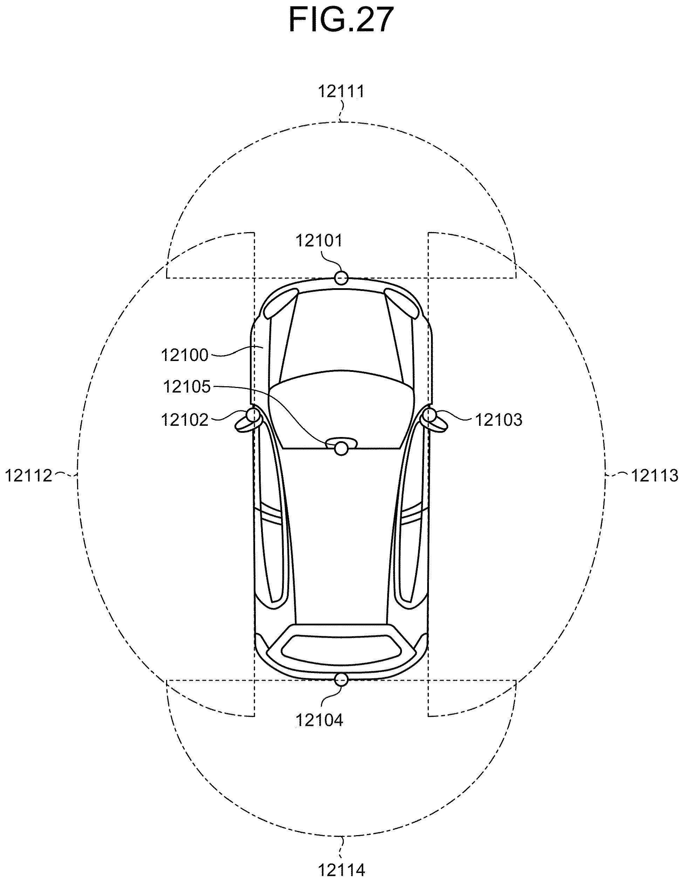

FIG. 27 is a diagram illustrating an example of installation positions of the imaging unit 12031. In FIG. 27, a vehicle 12100 includes, as the imaging unit 12031, imaging units 12101, 12102, 12103, 12104, and 12105.

The imaging units 12101, 12102, 12103, 12104, and 12105 are arranged at positions of, for example, a front nose, side mirrors, a rear bumper, a back door, or an upper part of a windshield inside the vehicle, and the like of the vehicle 12100. The imaging unit 12101 mounted on the front nose and the imaging unit 12105 mounted on the upper part of the windshield inside the vehicle mainly acquire images of the front of the vehicle 12100. The imaging units 12102 and 12103 mounted on the side mirrors mainly acquire images of the sides of the vehicle 12100. The imaging unit 12104 mounted on the rear bumper or the back door mainly acquires an image of the rear of the vehicle 12100. The front image acquired by the imaging units 12101 and 12105 is mainly used to detect a preceding vehicle, a pedestrian, an obstacle, a traffic signal, a traffic sign, a traffic lane, or the like.

Furthermore, FIG. 27 illustrates an example of imaging ranges of the imaging units 12101 to 12104. An imaging range 12111 indicates an imaging range of the imaging unit 12101 arranged on the front nose, imaging ranges 12112 and 12113 indicate imaging ranges of the imaging units 12102 and 12103 arranged on the respective side mirrors, and an imaging range 12114 indicates an imaging range of the imaging unit 12104 arranged on the rear bumper or the back door. For example, by superimposing pieces of image data captured by the imaging units 12101 to 12104, a downward image of the vehicle 12100 viewed from above is obtained.

At least one of the imaging units 12101 to 12104 may also have a function to acquire distance information. For example, at least one of the imaging units 12101 to 12104 may be a stereo camera including a plurality of imaging elements, or may be an imaging element including a pixel for detecting a phase difference.

For example, by obtaining a distance to each of stereoscopic objects in the imaging ranges 12111 to 12114 and obtaining a temporal change in the distance (relative speed with respect to the vehicle 12100) on the basis of the distance information obtained from the imaging units 12101 to 12104, the microcomputer 12051 is able to particularly detect, as a preceding vehicle, a stereoscopic object that is located closest to the vehicle 12100 on a road on which the vehicle 12100 travels and that travels at a predetermined speed (for example, 0 km/h or higher) in approximately the same direction as the vehicle 12100. Furthermore, the microcomputer 12051 is able to set, in advance, an inter-vehicular distance that needs to be ensured on the near side of the preceding vehicle, and perform automatic braking control (including following stop control), automatic acceleration control (including following starting control), and the like. In this way, it is possible to perform cooperation control aiming at automatic driving or the like in which running is autonomously performed independent of operation of a driver.

For example, the microcomputer 12051 is able to classify and extract stereoscopic object data related to a stereoscopic object as a two-wheel vehicle, a normal vehicle, a heavy vehicle, a pedestrian, or other stereoscopic objects, such as a power pole, on the basis of the distance information obtained from the imaging units 12101 to 12104, and use the stereoscopic object data to automatically avoid an obstacle. For example, the microcomputer 12051 identifies an obstacle around the vehicle 12100 as an obstacle that can be viewed by the driver of the vehicle 12100 or an obstacle that can hardly be viewed by the driver. Then, the microcomputer 12051 determines a crash risk indicating a degree of risk of crash with each of objects, and if the crash risk is equal to or larger than a set value and there is the possibility that crash occurs, it is possible to support driving to avoid crash by outputting an alarm to the driver via the audio speaker 12061 or the display unit 12062 or performing forcible deceleration or avoidance steering via the driving system control unit 12010.

At least one of the imaging units 12101 to 12104 may also be an infrared camera that detects infrared light. For example, the microcomputer 12051 is able to recognize a pedestrian by determining whether a pedestrian is present in the captured images of the imaging units 12101 to 12104. The pedestrian recognition described above is performed by, for example, a process of extracting feature points in the captured images of the imaging units 12101 to 12104 that serve as the infrared cameras and a process of performing pattern matching on a series of feature points representing a contour of an object to determine whether the object is a pedestrian. If the microcomputer 12051 determines that a pedestrian is present in the captured images of the imaging units 12101 to 12104 and recognizes the pedestrian, the voice image output unit 12052 causes the display unit 12062 to display a rectangular contour line for enhancing the recognized pedestrian in a superimposed manner. Furthermore, the voice image output unit 12052 may also cause the display unit 12062 to display an icon or the like that represents the pedestrian at a desired position.

In the above, an example of the vehicle control system to which the technique according to the present disclosure is applicable has been described. The technique according to the present disclosure is applicable to, for example, the imaging unit 12031 in the configuration described above. Specifically, the ranging apparatus 100 according to each of the embodiments described above is applicable to the imaging unit 12031. By applying the technique according to the present disclosure to the imaging unit 12031, it is possible to perform ranging from a running vehicle with higher accuracy.

Furthermore, the effects described in this specification are only exemplified and are not limited, and other effects may also be possible.

Furthermore, the present technology can also be configured as below.

(1) A measurement apparatus comprising:

a time-to-digital converter circuit that measures a time period between an emission timing at which light is emitted from a light emitting unit and a time point at which a light receiving unit receives the light;
a delay means that adds, to the time period measured by the time-to-digital converter circuit, a positive or a negative delay having a length that is different from a cycle of a clock used by the time-to-digital converter circuit and that is used as a unit amount of delay; and
a storage unit that stores therein time information that indicates the time period measured by the time-to-digital converter circuit and delay information that indicates an amount of delay to be added by the delay means, in association with each other, related to each of a case in which a delay is added by the delay means and a case in which a delay is not added by the delay means.

(2) The measurement apparatus according to (1), wherein

the time-to-digital converter circuit is configured to start measurement of the time period when a measurement start signal that is synchronized with a trigger signal that controls the emission timing is input, and
the delay means adds the positive delay to the time period measured by the time-to-digital converter circuit by delaying a timing at which the trigger signal is input to the light emitting unit.

(3) The measurement apparatus according to (1), wherein

the time-to-digital converter circuit is configured to stop measurement of the time period when a measurement stop signal that is output in accordance with reception of the light received by the light receiving unit is input, and
the delay means adds the positive delay to the time period measured by the time-to-digital converter circuit by delaying a timing at which the measurement stop signal is input to the time-to-digital converter circuit.

(4) The measurement apparatus according to (1), wherein

the time-to-digital converter circuit is configured to start measurement of the time period when a measurement start signal that is synchronized with a trigger signal that controls the emission timing is input, and
the delay means adds the negative delay to the time period measured by the time-to-digital converter circuit by delaying a timing at which the clock and the measurement start signal are supplied to the time-to-digital converter circuit.

(5) The measurement apparatus according to (1), wherein the delay means adds the positive delay to the time period measured by the time-to-digital converter circuit by extending an optical path length between a position at which the light is emitted from the light emitting unit and a position at which the light is output outside of the measurement apparatus.

(6) The measurement apparatus according to (1), wherein

the light emitting unit is arranged at a plurality of different positions along a direction of an optical axis, and
the delay means adds the positive or the negative delay to the time period measured by the time-to-digital converter circuit by switching, from among the plurality of light emitting units, the light emitting unit that emits the light.

(7) The measurement apparatus according to (1), wherein

the light receiving unit is arranged at a plurality of different positions along a direction in which the light is incident, and

the delay means adds the positive or the negative delay to the time period measured by the time-to-digital converter circuit by switching, from among the plurality of light receiving units, the light receiving unit that receives the light.

(8) A ranging apparatus comprising:

a light emitting unit;

a light receiving unit;

a time-to-digital converter circuit that measures a time period between an emission timing at which light is emitted from the light emitting unit and a time point at which the light receiving unit receives the light;

a delay means that adds, to the time period measured by the time-to-digital converter circuit, a positive or a negative delay having a length that is different from a cycle of a clock used by the time-to-digital converter circuit and that is used as a unit amount of delay;

a storage unit that stores therein time information that indicates the time period measured by the time-to-digital converter circuit and delay information that indicates an amount of delay to be added by the delay means, in association with each other, related to each of a case in which a delay is added by the delay means a case in which a delay is not added by the delay means,; and

a signal processing unit that calculates a distance to an object to be measured on the basis of combinations of the time information and the delay information that are stored in the storage unit.

(9) The ranging apparatus according to (8), wherein

the time-to-digital converter circuit is configured to start measurement of the time period when a measurement start signal that is synchronized with a trigger signal that controls the emission timing is input, and

the delay means adds the positive delay to the time period measured by the time-to-digital converter circuit by delaying a timing at which the trigger signal is input to the light emitting unit.

(10) The ranging apparatus according to (8), wherein

the time-to-digital converter circuit is configured to stop measurement of the time period when a measurement stop signal that is output in accordance with reception of the light received by the light receiving unit is input, and

the delay means adds the positive delay to the time period measured by the time-to-digital converter circuit by delaying a timing at which the measurement stop signal is input to the time-to-digital converter circuit.

(11) The ranging apparatus according to (8), wherein

the time-to-digital converter circuit is configured to start measurement of the time period when a measurement start signal that is synchronized with a trigger signal that controls the emission timing is input, and

the delay means adds the negative delay to the time period measured by the time-to-digital converter circuit by delaying a timing at which the clock and the measurement start signal are supplied to the time-to-digital converter circuit.

(12) The ranging apparatus according to (8), wherein the delay means adds the positive delay to the time period measured by the time-to-digital converter circuit by extending an optical path length between a position at which the light is emitted from the light emitting unit and a position at which the light is output outside of the ranging apparatus.

(13) The ranging apparatus according to (8), wherein

the light emitting unit is arranged at a plurality of different positions along a direction of an optical axis, and

the delay means adds the positive or the negative delay to the time period measured by the time-to-digital converter circuit by switching, from among the plurality of light emitting units, the light emitting unit that emits the light.

(14) The ranging apparatus according to (8), wherein

the light receiving unit is arranged at a plurality of different positions along a direction in which the light is incident, and

the delay means adds the positive or the negative delay to the time period measured by the time-to-digital converter circuit by switching, from among the plurality of light receiving units, the light receiving unit that receives the light.

(15) A movable body comprising:

a ranging apparatus that includes

a light emitting unit,

a light receiving unit,

a time-to-digital converter circuit that measures a time period between an emission timing at which light is emitted from the light emitting unit and a time point at which the light receiving unit receives the light,

a delay means that adds, to the time period measured by the time-to-digital converter circuit, a positive or a negative delay having a length that is different from a cycle of a clock used by the time-to-digital converter circuit and that is used as a unit amount of delay,

a storage unit that stores therein time information that indicates the time period measured by the time-to-digital converter circuit and delay information that indicates an amount of delay to be added by the delay means, in association with each other, related to each of a case in which a delay is added by the delay means and a case in which a delay is not added by the delay means, and

a signal processing unit that calculates a distance to an object to be measured on the basis of combinations of the time information and the delay information that are stored in the storage unit;

a main body unit on which the ranging apparatus is mounted; and

a movement control unit that moves the main body unit.

(16) The movable body according to (15), wherein

the time-to-digital converter circuit is configured to start measurement of the time period when a measurement start signal that is synchronized with a trigger signal that controls the emission timing is input, and

the delay means adds the positive delay to the time period measured by the time-to-digital converter circuit by delaying a timing at which the trigger signal is input to the light emitting unit.

(17) The movable body according to (15), wherein

the time-to-digital converter circuit is configured to stop measurement of the time period when a measurement stop signal that is output in accordance with reception of the light received by the light receiving unit is input, and

the delay means adds the positive delay to the time period measured by the time-to-digital converter circuit by delaying a timing at which the measurement stop signal is input to the time-to-digital converter circuit.

(18) The movable body according to (15), wherein

the time-to-digital converter circuit is configured to start measurement of the time period when a measurement start signal that is synchronized with a trigger signal that controls the emission timing is input, and

the delay means adds the negative delay to the time period measured by the time-to-digital converter circuit by delaying a timing at which the clock and the measurement start signal are supplied to the time-to-digital converter circuit.

(19) The movable body according to (15), wherein the delay means adds the positive delay to the time period measured by the time-to-digital converter circuit by extending an optical path length between a position at which the light is emitted from the light emitting unit and a position at which the light is output outside of the ranging apparatus.

(20) The movable body according to (15), wherein

the light emitting unit is arranged at a plurality of different positions along a direction of an optical axis, and

the delay means adds the positive or the negative delay to the time period measured by the time-to-digital converter circuit by switching, from among the plurality of light emitting units, the light emitting unit that emits the light.

(21) The movable body according to (15), wherein

the light receiving unit is arranged at a plurality of different positions along a direction in which the light is incident, and
the delay means adds the positive or the negative delay to the time period measured by the time-to-digital converter circuit by switching, from among the plurality of light receiving units, the light receiving unit that receives the light.

(22) A measurement method comprising:

measuring a time period between an emission timing at which light is emitted from a light emitting unit and a time point at which a light receiving unit receives the light;
adding, to the time period that is measured, a positive or a negative delay having a length that is different from a cycle of a clock used at the measuring the time period and that is used as a unit amount of delay; and
storing, in a storage unit, time information that indicates the time period measured at the measuring the time period and delay information that indicates an amount of delay to be added at the adding the delay, in association with each other, related to each of a case in which the delay is added and a case in which the delay is not added.

Reference Signs List

100, 100A, 100B, 100C, 100D, 100E, 100F ranging apparatus
101, 101a, 101b, 101c, 101d light emitting unit
102, 102a, 102b, 102c, 102d light receiving unit
110A, 110B, 110C, 110D, 110E, 110F time measurement unit
111 time-to-digital converter circuit
112 storage unit
113 timing control unit
114A, 114B, 114C, 114D, 114E, 114F delay means
120 signal processing unit

**Claims**

1. A measurement apparatus comprising:

a time-to-digital converter circuit that measures a time period between an emission timing at which light is emitted from a light emitting unit and a time point at which a light receiving unit receives the light;
a delay means that adds, to the time period measured by the time-to-digital converter circuit, a positive or a negative delay having a length that is different from a cycle of a clock used by the time-to-digital converter circuit and that is used as a unit amount of delay; and
a storage unit that stores therein time information that indicates the time period measured by the time-to-digital converter circuit and delay information that indicates an amount of delay to be added by the delay means, in association with each other, related to each of a case in which a delay is added by the delay means and a case in which a delay is not added by the delay means.

2. The measurement apparatus according to claim 1, wherein

the time-to-digital converter circuit is configured to start measurement of the time period when a measurement start signal that is synchronized with a trigger signal that controls the emission timing is input, and
the delay means adds the positive delay to the time period measured by the time-to-digital converter circuit by delaying a timing at which the trigger signal is input to the light emitting unit.

3. The measurement apparatus according to claim 1, wherein

the time-to-digital converter circuit is configured to stop measurement of the time period when a measurement stop signal that is output in accordance with reception of the light received by the light receiving unit is input, and the delay means adds the positive delay to the time period measured by the time-to-digital converter circuit by delaying a timing at which the measurement stop signal is input to the time-to-digital converter circuit.

4. The measurement apparatus according to claim 1, wherein

the time-to-digital converter circuit is configured to start measurement of the time period when a measurement start signal that is synchronized with a trigger signal that controls the emission timing is input, and the delay means adds the negative delay to the time period measured by the time-to-digital converter circuit by delaying a timing at which the clock and the measurement start signal are supplied to the time-to-digital converter circuit.

5. The measurement apparatus according to claim 1, wherein the delay means adds the positive delay to the time period measured by the time-to-digital converter circuit by extending an optical path length between a position at which the light is emitted from the light emitting unit and a position at which the light is output outside of the measurement apparatus.

6. The measurement apparatus according to claim 1, wherein

the light emitting unit is arranged at a plurality of different positions along a direction of an optical axis, and the delay means adds the positive or the negative delay to the time period measured by the time-to-digital converter circuit by switching, from among the plurality of light emitting units, the light emitting unit that emits the light.

7. The measurement apparatus according to claim 1, wherein

the light receiving unit is arranged at a plurality of different positions along a direction in which the light is incident, and the delay means adds the positive or the negative delay to the time period measured by the time-to-digital converter circuit by switching, from among the plurality of light receiving units, the light receiving unit that receives the light.

8. A ranging apparatus comprising:

a light emitting unit;
a light receiving unit;
a time-to-digital converter circuit that measures a time period between an emission timing at which light is emitted from the light emitting unit and a time point at which the light receiving unit receives the light;
a delay means that adds, to the time period measured by the time-to-digital converter circuit, a positive or a negative delay having a length that is different from a cycle of a clock used by the time-to-digital converter circuit and that is used as a unit amount of delay;
a storage unit that stores therein time information that indicates the time period measured by the time-to-digital converter circuit and delay information that indicates an amount of delay to be added by the delay means, in association with each other, related to each of a case in which a delay is added by the delay means a case in which a delay is not added by the delay means,; and
a signal processing unit that calculates a distance to an object to be measured on the basis of combinations of the time information and the delay information that are stored in the storage unit.

9. The ranging apparatus according to claim 8, wherein

the time-to-digital converter circuit is configured to start measurement of the time period when a measurement start signal that is synchronized with a trigger signal that controls the emission timing is input, and the delay means adds the positive delay to the time period measured by the time-to-digital converter circuit by delaying a timing at which the trigger signal is input to the light emitting unit.

10. The ranging apparatus according to claim 8, wherein

the time-to-digital converter circuit is configured to stop measurement of the time period when a measurement stop signal that is output in accordance with reception of the light received by the light receiving unit is input, and the delay means adds the positive delay to the time period measured by the time-to-digital converter circuit by delaying a timing at which the measurement stop signal is input to the time-to-digital converter circuit.

11. The ranging apparatus according to claim 8, wherein

the time-to-digital converter circuit is configured to start measurement of the time period when a measurement start signal that is synchronized with a trigger signal that controls the emission timing is input, and the delay means adds the negative delay to the time period measured by the time-to-digital converter circuit by delaying a timing at which the clock and the measurement start signal are supplied to the time-to-digital converter circuit.

12. The ranging apparatus according to claim 8, wherein the delay means adds the positive delay to the time period measured by the time-to-digital converter circuit by extending an optical path length between a position at which the light is emitted from the light emitting unit and a position at which the light is output outside of the ranging apparatus.

13. The ranging apparatus according to claim 8, wherein

the light emitting unit is arranged at a plurality of different positions along a direction of an optical axis, and the delay means adds the positive or the negative delay to the time period measured by the time-to-digital converter circuit by switching, from among the plurality of light emitting units, the light emitting unit that emits the light.

14. The ranging apparatus according to claim 8, wherein

the light receiving unit is arranged at a plurality of different positions along a direction in which the light is incident, and the delay means adds the positive or the negative delay to the time period measured by the time-to-digital converter circuit by switching, from among the plurality of light receiving units, the light receiving unit that receives the light.

15. A measurement method comprising:

measuring a time period between an emission timing at which light is emitted from a light emitting unit and a time point at which a light receiving unit receives the light; adding, to the time period that is measured, a positive or a negative delay having a length that is different from a cycle of a clock used at the measuring the time period and that is used as a unit amount of delay; and storing, in a storage unit, time information that indicates the time period measured at the measuring the time period and delay information that indicates an amount of delay to be added at the adding the delay, in association with each other, related to each of a case in which the delay is added and a case in which the delay is not added.

# FIG.1

FIG.2

# FIG.3

101

**LIGHT EMITTING UNIT**

LDT

302

301

# FIG.4

102

**LIGHT RECEIVING UNIT**

VDDH

312

313

STP

311

VAND

# FIG.5

TIME-TO-DIGITAL CONVERTER CIRCUIT

111

322

FLIP-FLOP

323

BINARY CON-VERTING UNIT

Binary

N

OBJ

STP

N

Gray

N

321

GRAY CODE GENERATOR

CLK
STRT

# FIG.6

# FIG.7A

# FIG.7B

# FIG.7C

TIME IMFORMATION ACQUISITION TIME PERIOD

CLK

TDC COUNT 0 K

ADLY 10

STRT TD1 DELAY

LDT

EMISSION LIGHT TD2

REFLECTED LIGHT TOFO

STP TD3

# FIG.7D

# FIG.8

| ADLY | OBJ | | | |
|---|---|---|---|---|
| 00 | K | K | K | K |
| 01 | K | K | K | K+1 |
| 10 | K | K | K+1 | K+1 |
| 11 | K | K+1 | K+1 | K+1 |
| result | K | K+1/4 | K+2/4 | K+3/4 |

# FIG.9

```
        ┌──────────────┐
        │    START     │
        └──────┬───────┘
               │                              ┌─S10
        ┌──────▼─────────────────────────┐
        │  SET DELAY TIME TO BE ADDED TO  │
        │         MEASURED TIME           │
        └──────┬─────────────────────────┘
               │                              ┌─S11
        ┌──────▼─────────────────────────┐
        │ MEASURE TIME PERIOD BETWEEN LIGHT│
        │ EMISSION TIMING AND RECEPTION OF LIGHT│
        └──────┬─────────────────────────┘
               │                              ┌─S12
        ┌──────▼─────────────────────────┐
        │ STORE TIME INFORMATION THAT INDICATES│
        │      MEASURED TIME PERIOD AND    │
        │ DELAY INFORMATION THAT INDICATES DELAY│
        │  TIME IN ASSOCIATION WITH EACH OTHER │
        └──────┬─────────────────────────┘
               │                   ┌─S13
              ╱ ╲
         ╱  HAS     ╲
       ╱ PREDETERMINED ╲    NO
      ⟨ NUMBER OF TIME BEEN ⟩────┐
       ╲  PERFORMED?  ╱
         ╲         ╱
           ╲ ╱
            │ YES
        ┌───▼────┐
        │  END   │
        └────────┘
```

# FIG.10A

# FIG.10B

# FIG.10C

TIME IMFORMATION ACQUISITION TIME PERIOD

CLK

TDC
COUNT  0  K+1

ADLY  10

STRT  TD1

LDT  DELAY

EMISSION
LIGHT  TD2

RE-
FLECTED
LIGHT  TOFO

STP  TD3

# FIG.10D

# FIG.11

| ADLY | OBJ | | | |
|---|---|---|---|---|
| 00 | K | K | K | K |
| 01 | K | K+1 | K+1 | K+1 |
| 10 | K+1 | K+1 | K+2 | K+2 |
| 11 | K+2 | K+2 | K+2 | K+3 |
| result | K | K+1/4 | K+2/4 | K+3/4 |

# FIG.12

# FIG.13A

# FIG.13B

# FIG.13C

# FIG.13D

FIG.14

EP 3 940 414 A1

100C

TIME MEASUREMENT UNIT — 110C

LIGHT RECEIVING UNIT — 102 → STP → TIME-TO-DIGITAL CONVERTER CIRCUIT — 111 → OBJ → STORAGE UNIT — 112

LIGHT RECEIVING UNIT — 102 → STP → TIME-TO-DIGITAL CONVERTER CIRCUIT — 111 → OBJ → STORAGE UNIT — 112

REFLECTED LIGHT → LIGHT RECEIVING UNIT — 102 → STP → TIME-TO-DIGITAL CONVERTER CIRCUIT — 111 → OBJ → STORAGE UNIT — 112

200

DELAY MEANS — 114C ← ADLY

CLK  STRT

EMISSION LIGHT → LIGHT EMITTING UNIT — 101 ← LDT ← TIMING CONTROL UNIT — 113

SIGNAL PROCESSING UNIT — 120 → OUTPUT UNIT — 130

# FIG.15

EP 3 940 414 A1

# FIG.16A

# FIG.16B

# FIG.16C

# FIG.16D

# FIG.17

| ADLY | OBJ | | | |
|---|---|---|---|---|
| 00 | K | K | K | K |
| 01 | K-1 | K | K | K |
| 10 | K-1 | K-1 | K | K |
| 11 | K-1 | K-1 | K-1 | K |
| result | K | K+1/4 | K+2/4 | K+3/4 |

# FIG.18

EP 3 940 414 A1

# FIG.19A

# FIG.19B

# FIG.19C

# FIG.20A

# FIG.20B

# FIG.20C

# FIG.20D

FIG.21

# FIG.22

# FIG.23

# FIG.24

# FIG.25

SECURITY

BEAUTY CARE

MEDICAL TREATMENT, HEALTHCARE

SPORTS

IMAGE SENSOR

HOME ELECTRICAL APPLIANCE

AGRICULTURE

TRAFFIC

VIEWING

EP 3 940 414 A1

# FIG.26

EP 3 940 414 A1

# FIG.27

**INTERNATIONAL SEARCH REPORT**

| International application No. |
| --- |
| PCT/JP2020/009077 |

A. CLASSIFICATION OF SUBJECT MATTER
G01S 7/4865(2020.01)i; G01C 3/06(2006.01)i
FI: G01S7/4865; G01C3/06 120Q

According to International Patent Classification (IPC) or to both national classification and IPC

B. FIELDS SEARCHED

Minimum documentation searched (classification system followed by classification symbols)
G01S7/48-7/51, G01S17/00-17/95, G01C3/06, H03K5/26

Documentation searched other than minimum documentation to the extent that such documents are included in the fields searched
    Published examined utility model applications of Japan      1922-1996
    Published unexamined utility model applications of Japan   1971-2020
    Registered utility model specifications of Japan        1996-2020
    Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2018/122560 A1 (THE UNIVERSITY COURT OF THE UNIVERSITY OF EDINBURGH) 05.07.2018 (2018-07-05) specification, page 7, line 1 to page 16, line 25, fig. 1-4b | 1-15 |
| A | JP 2015-78953 A (DENSO CORP.) 23.04.2015 (2015-04-23) paragraphs [0015]-[0059], fig. 1-7 | 1-15 |
| A | JP 2013-240015 A (RENESAS ELECTRONICS CORP.) 28.11.2013 (2013-11-28) paragraphs [0012]-[0023], fig. 1 | 1-15 |
| A | US 2019/0064329 A1 (SZ DJI TECHNOLOGY CO., LTD.) 28.02.2019 (2019-02-28) paragraphs [0043]-[0059], fig. 2-3 | 1-15 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 May 2020 (27.05.2020) | 09 June 2020 (09.06.2020) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**INTERNATIONAL SEARCH REPORT**
Information on patent family members

International application No.

PCT/JP2020/009077

| Patent Documents referred in the Report | Publication Date | Patent Family | Publication Date |
|---|---|---|---|
| WO 2018/122560 A1 | 05 Jul. 2018 | JP 2020-504299 A paragraphs [0036]-[0072], fig. 1-4b CN 110312945 A | |
| JP 2015-78953 A | 23 Apr. 2015 | (Family: none) | |
| JP 2013-240015 A | 28 Nov. 2013 | (Family: none) | |
| US 2019/0064329 A1 | 28 Feb. 2019 | WO 2019/041269 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016211881 A